# EUROPEAN PATENT APPLICATION

(11) **EP 4 768 166 A1**
(43) Date of publication of application: **01.07.2026**
(21) Application number: 24874660.4
(22) Date of filing: 02.10.2024
(51) Int. Cl.: B23K 20/12

(54) **FRICTION STIR SPOT WELDING METHOD AND FRICTION STIR SPOT WELDING DEVICE**

(30) Priority: 06.10.2023 JP 2023174646
(71) Applicant: Nissan Motor Co. Ltd, Yokohama-shi, Kanagawa 220-8623 (JP)
(72) Inventor: MURAMATSU, Yoshitaka, (JP); TAKEOKA, Naoki, (JP); YOSHIKAWA, Shuhei, (JP); MIYAZAWA, Tomonori, Atsugi-shi, Kanagawa 243-0123 (JP); GAO, Li, Atsugi-shi, Kanagawa 243-0123 (JP); OIKI, Daisuke, Atsugi-shi, Kanagawa 243-0123 (JP)
(74) Representative: Grünecker Patent- und Rechtsanwälte PartG mbB
(86) International application number: PCT/JP2024/035347
(87) International publication number: WO 2025/075060

(57) **Abstract**

A friction stir spot welding device (M) performs friction stir welding of an upper plate (31) and a lower plate (32). In a state where the pin (11) is retracted with respect to the upper plate front surface (31A), the controller (C) press-fits the shoulder (12) from the upper plate front surface (31A) to a predetermined reference position set with reference to the lower plate front surface (32A) at a first pressure, and then press-fits the shoulder (12) from the reference position to a press-fitting position deeper than the lower plate front surface (32A) at a second pressure. In a case where the hardness of the upper plate (31) is lower than the hardness of the lower plate (32), the first pressure is set to be lower than the second pressure, and in a case where the hardness of the upper plate (31) is higher than the hardness of the lower plate (32), the first pressure is set to be higher than the second pressure.

## Description

### Technical Field

The present disclosure relates to a friction stir spot welding method and a friction stir spot welding device for welding a plurality of metal members.

### Background Art

A welded body formed by welding a plurality of metal members may be used as a constituent member of a structure such as an aircraft, a railway vehicle, or an automobile. As one of such welding methods, a friction stir spot welding method is known.

Patent Literature 1 discloses a welding method for forming a welded body by friction stir spot welding of three metal members using a double-acting rotary tool including a coaxially disposed probe, an inner shoulder member, and an outer shoulder member. The probe is also referred to as a pin and the inner shoulder member is also referred to as a shoulder. The outer shoulder member is also referred to as a clamp. The shoulder has a cylindrical shape enclosing a cylindrical pin, and the clamp has a cylindrical shape enclosing the shoulder. In this technique, the pin and the shoulder are press-fitted into the overlapping portion of the three metal members to be spot-welded in advance to the vicinity of the interfaces of the first sheet and the second sheet in a state where the distal end surfaces of the pin and the shoulder are flush with each other to perform friction stirring, and the pin is protruded from the shoulder and further press-fitted into the vicinity of the interfaces of the second sheet and the third sheet, thereby forming a stir welded portion in which the three metal members are spot-welded to the overlapping portion.

### Citation List

### Patent Literature

Patent Literature 1: JP 2006-320924 A

In the conventional friction stir spot welding method as described in Patent Literature 1, the metal member may be deformed in the surface direction when the rotary tool enters the metal member, and particularly, when the spot welding portion is disposed near the end portion of the metal member, there is a problem that the end portion of the welded body is deformed.

### Summary of Invention

An object of the present disclosure is to provide a friction stir spot welding method and a friction stir spot welding device capable of suppressing deformation of a welded body around a spot welding portion.

A friction stir spot welding method according to one aspect of the present disclosure is a friction stir spot welding method of welding a first member and a second member, which are made of metal, by softening the first member having a first front surface and a first back surface and the second member having a second front surface and a second back surface with frictional heat. The friction stir spot welding method includes preparing a friction stir spot welding device including a pin and a cylindrical shoulder having a hollow portion into which the pin is inserted, disposing the first member and the second member such that at least a part of the second front surface faces the first back surface and forms an overlapping portion in which the first member and the second member overlap each other, disposing the pin and the shoulder to face the overlapping portion, setting a first pressure and a second pressure for press-fitting the shoulder such that the first pressure is smaller than the second pressure when a hardness of the first member is lower than a hardness of the second member, and the first pressure is larger than the second pressure when the hardness of the first member is higher than the hardness of the second member, press-fitting the shoulder from the first front surface side at the first pressure until reaching a predetermined reference position set with reference to the second front surface in a state where the pin is retracted with respect to the overlapping portion, press-fitting the shoulder from the reference position to a press-fitting position deeper than the second front surface with the second pressure, and retracting the shoulder from the press-fitting position and allowing the pin to enter the overlapping portion.

A friction stir spot welding device according to another aspect of the present disclosure is a friction stir spot welding method of welding a first member and a second member, which are made of metal, by softening the first member having a first front surface and a first back surface and the second member having a second front surface and a second back surface with frictional heat. The friction stir spot welding device includes a welding tool that includes a pin and a cylindrical shoulder having a hollow portion into which the pin is inserted, a rotation mechanism that is capable of rotating the welding tool, a moving mechanism that is capable of independently moving the pin and the shoulder in a direction in which the pin extends, and a control unit that controls the rotation mechanism and the moving mechanism. The control unit is configured to execute setting a first pressure and a second pressure for press-fitting the shoulder such that the first pressure is smaller than the second pressure when a hardness of the first member is lower than a hardness of the second member, and the first pressure is larger than the second pressure when the hardness of the first member is higher than the hardness of the second member, and in a state in which the first member and the second member are disposed so as to form an overlapping portion in which at least a part of the second front surface faces the first back surface and the first member and the second member overlap each other, and the pin and the shoulder are disposed so as to face the overlapping portion, the rotation mechanism and the moving mechanism are controlled such that the pin is retracted with respect to the overlapping portion, the shoulder is press-fitted from the first front surface side by the first pressure until reaching a predetermined reference position set with reference to the second front surface, the shoulder is press-fitted from the reference position to a press-fitting position deeper than the second front surface by the second pressure, and then the shoulder is retracted from the press-fitting position and the pin enters the overlapping portion.

### Brief Description of Drawings

[FIG. 1] FIG. 1 is a schematic view illustrating a configuration of a friction stir spot welding device according to the present disclosure.
[FIG. 2] FIG. 2 is a diagram illustrating a shoulder-preceding process of press-fitting a shoulder into an overlapping portion of a welding member in advance in a case where a friction stir spot welding tool is used.
[FIG. 3] FIG. 3 is a diagram illustrating a process chart of a friction stir spot welding method according to an embodiment of the present disclosure.
[FIG. 4] FIG. 4 is a schematic cross-sectional view for explaining a welded portion of a welded body.
[FIG. 5A] FIG. 5A is a diagram for explaining a part of a shoulder-preceding process in the friction stir spot welding method according to an embodiment of the present disclosure.
[FIG. 5B] FIG. 5B is a diagram for explaining a part of the shoulder-preceding process in the friction stir spot welding method according to the embodiment of the present disclosure.
[FIG. 6] FIG. 6 is a graph illustrating transition of a shoulder pressing amount and a deformation amount of a plate end portion for explaining the friction stir spot welding method according to an embodiment of the present disclosure.
[FIG. 7] FIG. 7 is a graph illustrating a relationship between an indentation amount and a TSS for explaining an example of the friction stir spot welding method according to the present disclosure.
[FIG. 8] FIG. 8 is a graph illustrating a relationship between a distance from a plate end portion to an outer periphery of a shoulder and an end deformation amount for explaining an example of the friction stir spot welding method according to the present disclosure.
[FIG. 9] FIG. 9 is a graph illustrating a relationship between a reference position and an end deformation amount for explaining an example of the friction stir spot welding method according to the present disclosure.
[FIG. 10] FIG. 10 is a graph illustrating a relationship between a pressure ratio P1/P2 and an end deformation amount for explaining an example of the friction stir spot welding method according to the present disclosure.
[FIG. 11] FIG. 11 is a graph illustrating a relationship between a plate set of an upper plate and a lower plate and an end deformation amount for explaining an example of the friction stir spot welding method according to the present disclosure.
[FIG. 12A] FIG. 12A is a see-through perspective view illustrating a type of a plate set for explaining an example of the friction stir spot welding method according to the present disclosure.
[FIG. 12B] FIG. 12B is a see-through perspective view illustrating a type of a plate set for explaining an example of the friction stir spot welding method according to the present disclosure.
[FIG. 12C] FIG. 12C is a see-through perspective view illustrating a type of a plate set for explaining an example of the friction stir spot welding method according to the present disclosure.
[FIG. 13] FIG. 13 is a graph illustrating a relationship between the presence or absence of application of an adhesive and the indentation amount for explaining an example of the friction stir spot welding method according to the present disclosure.
[FIG. 14] FIG. 14 is a graph illustrating a relationship between the presence or absence of application of an adhesive and a TSS for explaining an example of the friction stir spot welding method according to the present disclosure.
[FIG. 15] FIG. 15 is a graph illustrating a relationship between the presence or absence of application of an adhesive and a CTS for explaining an example of the friction stir spot welding method according to the present disclosure.
[FIG. 16] FIG. 16 is a graph illustrating a relationship between a distance from a plate end portion to an outer periphery of a shoulder and an end deformation amount for explaining an example of the friction stir spot welding method according to the present disclosure.
[FIG. 17A] FIG. 17A is a schematic view of a welded body for explaining the friction stir spot welding method according to a modified embodiment of the present disclosure.
[FIG. 17B] FIG. 17B is a schematic view of a welded body for explaining the friction stir spot welding method according to a modified embodiment of the present disclosure.
[FIG. 18] FIG. 18 is a perspective view illustrating a state in which an end portion of a plate material is deformed in another friction stir spot welding method compared to the friction stir spot welding method according to the present disclosure.
[FIG. 19] FIG. 19 is a photographic image illustrating a state in which an end portion of a plate material is deformed in another friction stir spot welding method compared to the friction stir spot welding method according to the present disclosure.
[FIG. 20] FIG. 20 is a graph illustrating a transition of a shoulder pressing amount and a deformation amount of a plate end portion in another friction stir spot welding method compared to the friction stir spot welding method according to the present disclosure.

### Description of Embodiments

Hereinafter, embodiments of the present disclosure will be described in detail with reference to the drawings. A friction stir spot welding method according to the present disclosure can be applied to the manufacture of various welded bodies obtained by overlapping two or more structural members such as a metal plate, a frame, an exterior member, or a columnar member and performing spot welding. The welded body to be manufactured is, for example, a constituent member of a structure such as an aircraft, a railway vehicle, or an automobile.

### [Configuration of friction stir spot welding device]

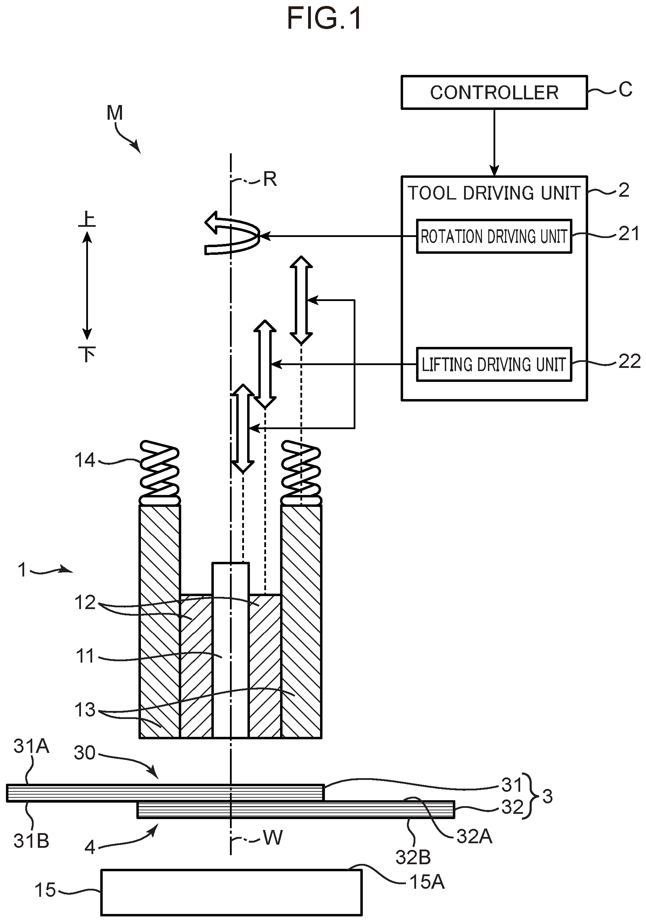

FIG. 1 is a schematic view illustrating a configuration of a friction stir spot welding device M according to an embodiment of the present disclosure.

The friction stir spot welding device M softens an upper plate 31 and a lower plate 32 by frictional heat to perform welding. The friction stir spot welding device M includes a tool 1 for friction stir spot welding, a tool driving unit 2 that rotates and lifts and lowers the tool 1, and a controller C that controls the operation of the tool driving unit 2. In FIG. 1, directions "up" and "down" are indicated for convenience of description, and are not intended to limit an actual use direction of the tool 1.

The tool 1 is supported by a tool fixing portion. The tool fixing portion can be, for example, a distal end portion of an articulated robot. A backup 15 is disposed facing the lower end surface of the tool 1. At least two metal members to be welded are disposed between the tool 1 and the backup 15. FIG. 1 illustrates an example in which an overlapping portion 30 in which a part of the upper plate 31 formed of a flat plate and a part of the lower plate 32 formed of a flat plate similarly overlap each other in the vertical direction is disposed between the tool 1 and the backup 15. The tool 1 corresponds to a welding tool of the present disclosure.

The tool 1 includes a pin 11 having a central axis extending along a predetermined axial direction, a shoulder 12, a clamp 13, and a spring 14. The pin 11 is formed in a cylindrical shape, and is disposed such that its central axis extends in the vertical direction. The pin 11 is rotatable about the central axis as a rotation axis R, and is vertically movable up and down, that is, movable forward and backward along the rotation axis R. When the tool 1 is used, the rotation axis R and a spot welding position W in the overlapping portion 30 are aligned. The tool 1 is a double-acting tool in which the pin 11 and the shoulder 12 move independently.

The shoulder 12 includes a hollow portion into which the pin 11 is inserted, and is a member formed in a cylindrical shape. The axis of the shoulder 12 is coaxial with the axis of the pin 11 which is the rotation axis R. The shoulder 12 rotates about the rotation axis R and moves up and down, that is, moves forward and backward in the vertical direction along the rotation axis R.

Both the shoulder 12 and the pin 11 inserted into the hollow portion relatively move in the rotation axis R direction while rotating about the rotation axis R. That is, the pin 11 and the shoulder 12 can not only move up and down simultaneously along the rotation axis R, but also independently move such that one descends and the other ascends.

The clamp 13 includes a hollow portion into which the shoulder 12 is inserted, and is a member formed in a cylindrical shape. The axis of the clamp 13 is also coaxial with the rotation axis R. The clamp 13 does not rotate about the axis, but moves up and down, that is, moves forward and backward in the vertical direction along the rotation axis R. The clamp 13 serves to surround the outer periphery of the pin 11 or the shoulder 12 when the pin or the shoulder performs friction stir. By the enclosure of the clamp 13, the friction stir spot welding portion can be finished smoothly without scattering the friction stir material.

The spring 14 is attached to the upper end side of the clamp 13 and biases the clamp 13 downward in a direction toward the overlapping portion 30. The clamp 13 is attached to the tool fixing portion via the spring 14. As illustrated in FIG. 1, the backup 15 includes a support surface 15A that supports the lower surface side of the overlapping portion 30 to be welded. The backup 15 is a backing member that supports the overlapping portion 30 when the pin 11 or the shoulder 12 is press-fitted into the overlapping portion 30. The clamp 13 biased by the spring 14 presses the overlapping portion 30 against the backup 15.

The tool driving unit 2 includes a rotation driving unit 21 and a lifting driving unit 22. The rotation driving unit 21 includes a motor, a driving gear, and the like, and rotatably drives the pin 11 and the shoulder 12 about the rotation axis R. The rotation driving unit 21 corresponds to a rotation mechanism of the present disclosure. The lifting driving unit 22 is a mechanism that moves the pin 11, the shoulder 12, and the clamp 13 forward and backward, that is, moves up and down along the rotation axis R. The lifting driving unit 22 drives the pin 11 so that the pin 11 is press-fitted into the overlapping portion 30 and retracted from the overlapping portion 30. In addition, the lifting driving unit 22 moves the shoulder 12 forward and backward along the rotation axis R, and performs press-fitting and retraction of the shoulder 12 into the overlapping portion 30. Note that the lifting driving unit 22 corresponds to a moving mechanism of the present disclosure capable of independently moving the pin 11 and the shoulder 12 in the axial direction in which the pin 11 extends. Further, the lifting driving unit 22 moves the clamp 13 toward the overlapping portion 30 and presses the overlapping portion 30 against the backup 15. At this time, a biasing force of the spring 14 acts. In other words, in the present embodiment, a first lifting shaft portion that integrally drives the pin 11, the shoulder 12, and the clamp 13, a second lifting shaft portion that independently drives the pin 11, and three shaft portions of the central rotating shaft portion are included.

The controller C includes a microcomputer or the like, and controls the operation of each unit of a tool driving unit 2 by executing a predetermined control program. Specifically, the controller C controls the rotation driving unit 21 to cause the pin 11 and the shoulder 12 to perform a required rotation operation. In addition, the controller C controls the lifting driving unit 22 to cause the pin 11, the shoulder 12, and the clamp 13 to perform a required forward and backward movement operation. The controller C corresponds to a control unit of the present disclosure, and sets rotation, a movement amount, a movement position, a pressurizing force, and the like of each member described below.

The upper plate 31 is made of metal, and has an upper plate front surface 31A and an upper plate back surface 31B as illustrated in FIG. 1. The upper plate front surface 31A is a front surface of the upper plate 31, and corresponds to the upper surface of the upper plate 31 in FIG. 1. The upper plate 31 corresponds to a first member of the present disclosure. Similarly, the upper plate back surface 31B is a back surface of the upper plate 31 and corresponds to a lower surface of the upper plate 31 in FIG. 1. The upper plate front surface 31A corresponds to a first front surface of the present disclosure, and the upper plate back surface 31B corresponds to a first back surface of the present disclosure. As an example, the upper plate 31 is made of an aluminum alloy. The upper plate 31 may be a wrought material or a cast. The upper plate 31 may be subjected to chemical conversion treatment, electrodeposition coating, or the like.

The lower plate 32 is made of metal, and has a lower plate front surface 32A and a lower plate back surface 32B as illustrated in FIG. 1. The lower plate front surface 32A is a front surface of the lower plate 32, and corresponds to an upper surface of the lower plate 32 in FIG. 1. Similarly, the lower plate back surface 32B is a back surface of the lower plate 32, and corresponds to a lower surface of the lower plate 32 in FIG. 1. The lower plate 32 corresponds to a second member of the present disclosure. The lower plate front surface 32A corresponds to a second front surface of the present disclosure, and the lower plate back surface 32B corresponds to a second back surface of the present disclosure. As an example, the lower plate 32 is made of high-tensile steel. The lower plate 32 may be made of aluminum alloy, mild steel, or hot stamped steel. The lower plate 32 may be subjected to non-plating treatment, zinc plating treatment, Al-Si plating treatment, chemical conversion treatment, electrodeposition coating, and the like. An adhesive or a sealing material may be interposed between the upper plate 31 and the lower plate 32. As described above, when the upper plate 31 is made of aluminum alloy and the lower plate 32 is made of high-tensile steel, the melting point of the upper plate 31 is set to be lower than the melting point of the lower plate 32, and the hardness of the upper plate 31 is set to be lower than the hardness of the lower plate 32.

### [Method of Using Tool]

Subsequently, a method of using the tool 1 exemplified in the present embodiment, that is, a friction stir spot welding method will be described. As a method of using the friction stir spot welding device M, there are roughly a pin-preceding process of first press-fitting the pin 11 of the tool 1 into the overlapping portion of the welding member and a shoulder-preceding process of first press-fitting the shoulder 12 into the overlapping portion of the welding member. Among them, in the present embodiment, a shoulder-preceding process is adopted.

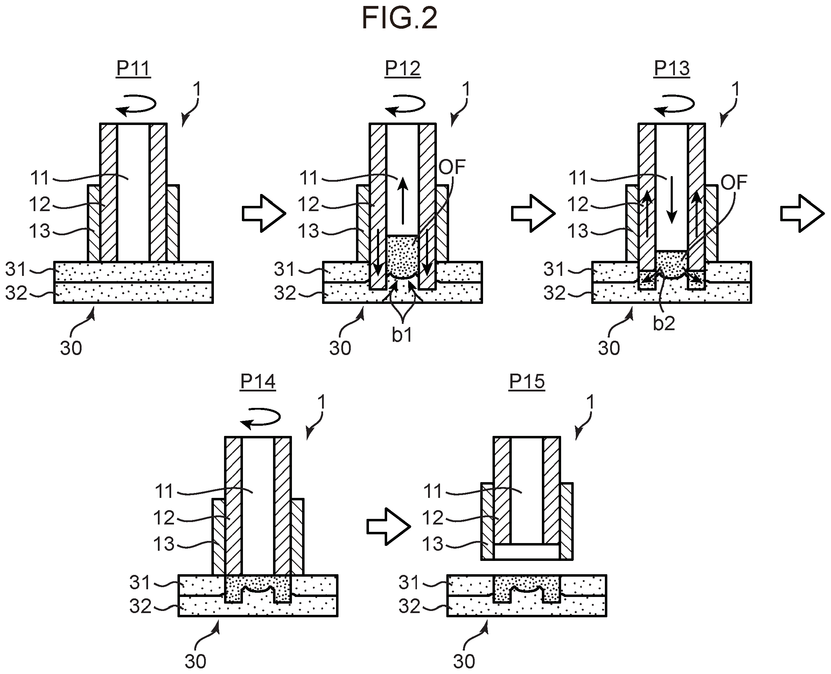

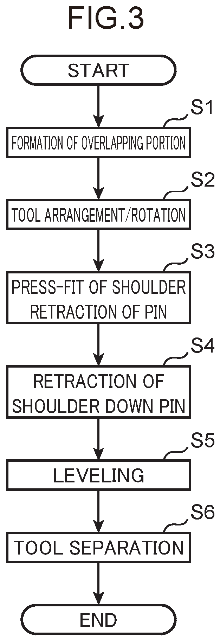

FIG. 2 illustrates processes P11 to P15 of the friction stir spot welding method according to the shoulder-preceding process. FIG. 3 is a diagram illustrating a process chart of a friction stir spot welding method according to the present embodiment. FIG. 3 schematically illustrates a process of friction stir spot welding of the overlapping portion 30 between the upper plate 31 and the lower plate 32.

In performing friction stir spot welding, first, as shown in step S1 of FIG. 3, the overlapping portion 30 is formed by the upper plate 31 and the lower plate 32. In the overlapping portion 30, at least a part of the lower plate front surface 32A abuts the upper plate back surface 31B, and the upper plate 31 and the lower plate 32 are disposed so as to overlap each other.

Next, as illustrated in S2 of FIG. 3, the tool 1 is disposed at a predetermined position and rotated. Specifically, first, the tool 1 is disposed facing the overlapping portion 30 such that the rotation axis R of the tool 1 is parallel to the overlapping direction of the upper plate 31 and the lower plate 32, that is, the vertical direction. In this disposed mode to face each other, the rotation axis R of the tool 1 may be inclined with respect to the vertical direction. In the present embodiment, the lower end surface of the tool 1 abuts on the upper plate front surface 31A of the upper plate 31 in a state where the rotation axis R is aligned with a predetermined spot welding position W. At this time, as illustrated in process P11 of FIG. 2, the clamp 13 presses the overlapping portion 30 against the backup 15 with the biasing force of the spring 14. In this manner, in a state where the lower end surface of the tool 1 is in contact with the upper plate front surface 31A of the upper plate 31, the controller C controls the rotation driving unit 21 to rotate the pin 11 and the shoulder 12 around the rotation axis R at a predetermined rotational speed. By this rotation, the region where the pin 11 and the shoulder 12 are in contact with the overlapping portion 30 is preheated by friction. That is, process P11 of FIG. 2 illustrates a process of preheating the overlapping portion 30.

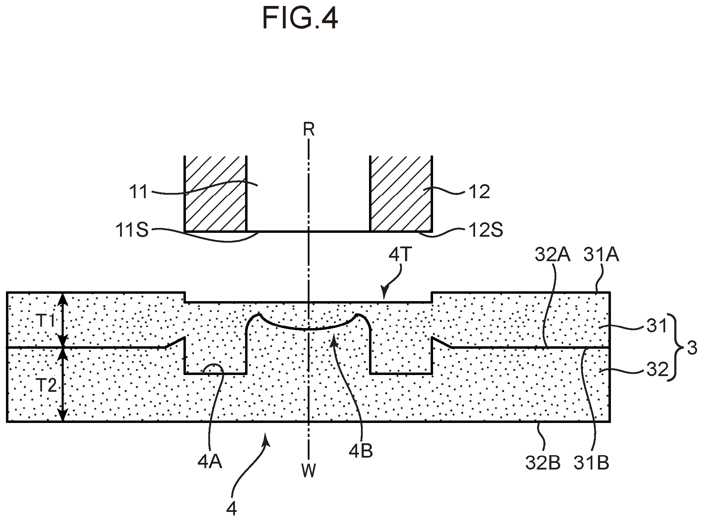

Next, as illustrated in process P12 of FIG. 2 and step S3 of FIG. 3, a press-fitting process in which the pin 11 is retracted from the overlapping portion 30 and the shoulder 12 is press-fitted into the overlapping portion 30 is performed. In this process, while maintaining the rotation of the tool 1, the controller C controls the lifting driving unit 22 to lower the shoulder 12 as in process P12 of FIG. 2 and press-fit the shoulder into the overlapping portion 30, while raising the pin 11, that is, retracting the pin. The clamp 13 is immovable. The shoulder 12 is press-fitted from the upper plate front surface 31A to a press-fitting position deeper than the lower plate front surface 32A in the overlapping portion 30. In addition, by this operation, as indicated by an arrow b1 in FIG. 2, the material of the press-fitting region of the shoulder 12 is stirred, and an overflowing material OF overflowing from the overlapping portion 30 by the press-fitting is released to the hollow space of the shoulder 12 generated by the retraction of the pin 11. As a result, a base portion of an anchor 4B of FIG. 4 described in detail later is formed. In the press-fitting process, a pressurizing force along the axial direction, that is, a total pressurizing force is applied to the entire pin 11, shoulder 12, and clamp 13. On the other hand, a clamping pressurizing force for pressing the clamp 13 against the backup 15 by the spring 14 is applied to the clamp 13. As a result, the press-fitting pressurizing force by which the tool 1 is pushed toward a welded body 3 corresponds to a force obtained by subtracting the clamping pressurizing force from the total pressurizing force.

Next, as illustrated in process P13 of FIG. 2 and step S4 of FIG. 3, the controller C controls the lifting driving unit 22 to retract the shoulder 12 from the press-fitting position while maintaining the rotation of the tool 1, and lowers the pin 11 so as to enter the overlapping portion 30. This process shows a backfilling process of the overflowing material OF. In this process, the controller C controls the lifting driving unit 22 to raise the shoulder 12 and lower the pin 11.

As the pin 11 descends, as indicated by an arrow b2, the overflowing material OF released into the hollow space is backfilled in the press-fitting region of the shoulder 12.

Next, as illustrated in process P14 of FIG. 2 and step S5 of FIG. 3, a leveling process of applying leveling processing to the overlapping portion 30 is performed. In this process, the controller C controls the lifting driving unit 22 to rotate the lower end surface of the pin 11 and the lower end surface of the shoulder 12 in a state of being disposed at a position slightly lower than the front surface 31A of the upper plate 31, thereby smoothing the spot welding portion. As a result, an indent 4T of FIG. 4 described later in detail is formed. Thereafter, the tool 1 is separated from the overlapping portion 30 as illustrated in process P15 of FIG. 2 and step S6 of FIG. 3. By the above process, as illustrated in FIG. 1, a stir welded portion 4 in which the upper plate 31 and the lower plate 32 are welded is formed. The stir welded portion 4 corresponds to a welded portion of the present disclosure.

### [Cross-Sectional Structure of Welded Body]

FIG. 4 is a schematic cross-sectional view for explaining the stir welded portion 4 of the welded body 3 formed by the friction stir spot welding method as described above. The stir welded portion 4 has a welded bottom surface 4A, an anchor 4B, and an indent 4T. In FIG. 4, plate thicknesses T1 and T2 of the upper plate 31 and the lower plate 32 are illustrated.

The welded bottom surface 4A is an interface between the upper plate 31 and the lower plate 32 that is generated at a position deeper than the lower plate front surface 32A with respect to the upper plate front surface 31A by being pressed by the shoulder 12. When viewed along the rotation axis R, the welded bottom surface 4A has a ring shape corresponding to a shoulder lower surface portion 12S of the shoulder 12. Note that the ring shape is not limited to one including two perfect circles, and may be deformed depending on the conditions of friction stir spot welding. In other words, the welded bottom surface 4A has a substantially ring shape in plan view.

The anchor 4B is a raised portion in which a part of the lower plate 32 is raised to a position higher than the lower plate front surface 32A with reference to the welded bottom surface 4A on the radially inner side of the welded bottom surface 4A. The anchor 4B is formed by crushing the upper end portion of the overflowing material OF overflowing from the overlapping portion 30 into the hollow space of the shoulder 12 in the press-fitting process by the pin 11 in the backfilling process.

The indent 4T is disposed to face the welded bottom surface 4A and the anchor 4B in the overlapping direction of the upper plate 31 and the lower plate 32, that is, in the vertical direction, and corresponds to a recessed portion in which a part of the upper plate front surface 31A of the upper plate 31 is recessed. As described above, the indent 4T can be actively formed by rotating the lower end surface of the pin 11 and the lower end surface of the shoulder 12 in a state where the lower end surface of the pin and the lower end surface of the shoulder are disposed at positions lower than the upper plate front surface 31A of the upper plate 31 in the leveling process. In the leveling process, the lower end surface of the pin 11 and the lower end surface of the shoulder 12 may be disposed to be flush with the upper plate front surface 31A of the upper plate 31.

### [Deformation of Plate Material End Portion]

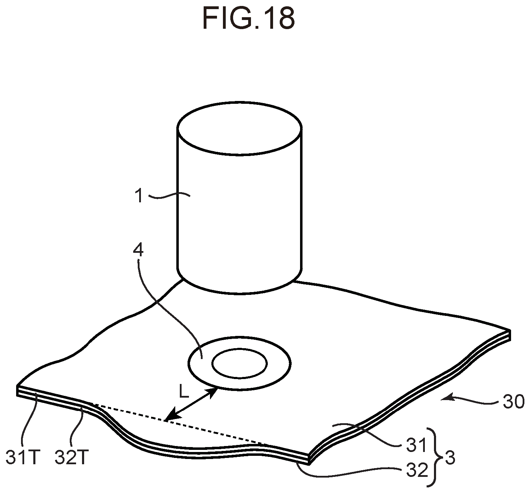

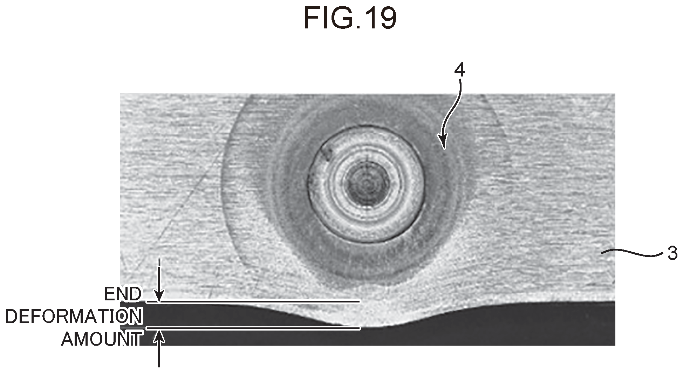

FIGS. 18 and 19 are a perspective view and a photographic image illustrating a state in which an end portion of a plate material is deformed in another friction stir spot welding method compared to the friction stir spot welding method according to the present embodiment. FIG. 19 is an image of the stir welded portion 4 of the welded body 3 viewed from above along the same rotation axis R as in FIG. 1. The inventors of the present disclosure have newly found that a part of the plate material may deform in the surface direction around the stir welded portion 4 formed by the friction stir spot welding method. In particular, as illustrated in FIGS. 18 and 19, it has been found that when the overlapping portion 30 is formed such that an end portion 31T of the upper plate 31 extends along an end portion 32T of the lower plate 32, and the stir welded portion 4 is formed at a position close to the end portions 31T and 32T, a part of the welded body 3 protrudes outward. Such deformation may cause a restriction WP on the size of the weldable object, for example, a flange width, or may affect the strength of the joint portion formed by the stir welded portion 4.

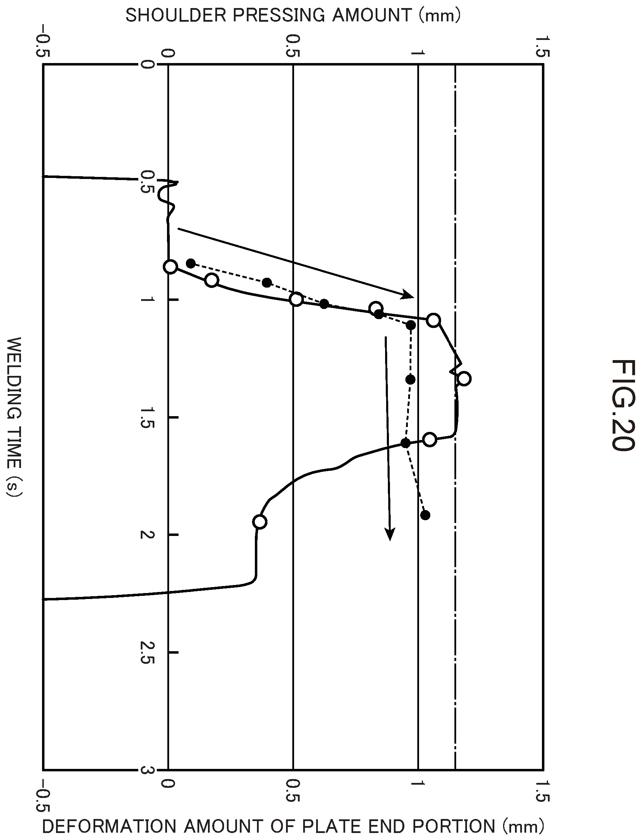

Therefore, the inventors of the present disclosure have found that the above deformation occurs in the press-fitting process of the shoulder 12 by repeating intensive experiments and verifications. Specifically, FIG. 20 is a graph illustrating a transition of a shoulder pressing amount and a deformation amount of a plate end portion in another friction stir spot welding method compared to the friction stir spot welding method according to the present disclosure. Table 1 shows experimental data corresponding to the graph of FIG. 20. Note that Data numbers in the following tables are given to organize data in the tables, and do not mean that data assigned the same number among different tables are the same data.

**[Table 1]**

| Data | Press-fitting process stop position | Backfilling process stop position | Tool target press-fitting depth | Pressurization input condition | | | Other conditions | | | | | | | | Stop time | End deformation amount |
|---|---|---|---|---|---|---|---|---|---|---|---|---|---|---|---|---|
| | | | | Clamp | ST2-1 | ST2-2 | Rotational speed | End distance I | Upper plate | Upper plate thickness | Lower plate | Lower plate thickness | Tool diameter | Presence/absence of tool tapper tool tapper | | |
| 1 | 0 | | +0.15 | 7 | 14.7 | 14.7 | 1500 | 3 | 6000-series A1 | 1.1 | 1.2 GPa-class steel | 1.2 | *ϕ* 5.5-3.35 | Presence | 0.85 | 0.091 |
| 2 | 0.2 | 0.2 | +0.15 | 7 | 14.7 | 14.7 | 1500 | 3 | 6000-series A1 | 1.1 | 1.2 GPa-class steel | 1.2 | *ϕ* 5.5-3.35 | Presence | 0.93 | 0.396 |
| 3 | 0.5 | | +0.15 | 7 | 14.7 | 14.7 | 1500 | 3 | 6000-series A1 | 1 1 | 1.2 GPa-class steel | 1.2 | *ϕ* 5.5-3.35 | Presence | 1.02 | 0.619 |
| 4 | 0.8 | | +0.15 | 7 | 14.7 | 14.7 | 1500 | 3 | 6000-series A1 | 1.1 | 1.2 GPa-class steel | 1.2 | *ϕ* 5.5-3.35 | Presence | 1.06 | 0.843 |
| 5 | 1.06 | | +0.15 | 7 | 14.7 | 14.1 | 1500 | 3 | 6000-series A1 | 1.1 | 1.2 GPa-class steel | 1.2 | *ϕ* 5.5-3.35 | Presence | 1.11 | 0.965 |
| 6 | 1.21 | | +0.15 | 7 | 14.7 | 14.7 | 1500 | 3 | 6000-series A1 | 1.1 | 1.2 GPa-class steel | 1.2 | *ϕ* 5.5-3.35 | Presence | 1.34 | 0.965 |
| 7 | 1.21 | 06 | +0.15 | 7 | 14.7 | 14.7 | 1500 | 3 | 6000-series A1 | 1.1 | 1.2 GPa-class steel | 1.2 | *ϕ* 5.5-3.35 | Presence | 1.61 | 0.944 |
| 8 | 1.21 | 0 | +0.15 | 7 | 14.7 | 14.7 | 1500 | 3 | 6000-series A1 | 1.1 | 1.2 GPa-class steel | 1.2 | *ϕ* 5.5-3.35 | Presence | 1.92 | 1 025 |

In FIG. 20, the horizontal axis represents the welding time, the left vertical axis represents the shoulder pressing amount, and the right vertical axis represents the end deformation amount of the plate material in FIG. 19. Note that the solid line graph corresponds to the shoulder pressing amount, and the broken line graph corresponds to the end deformation amount. A zero point on the left vertical axis corresponds to the upper plate front surface 31A of the upper plate 31. In the other friction stir spot welding method, the upper plate 31 is a 6000-series aluminum alloy having a plate thickness of 1.1 mm, and the lower plate 32 is a 1.2 GPa-class steel plate having a plate thickness of 1.2 mm. Then, until reaching a predetermined press-fitting position, the press-fitting pressurizing force of the shoulder 12, that is, the pressurizing force at which the tool 1 in FIG. 1 is pushed toward the welded body 3 is constant, and is maintained at, for example, 7.7 kN. The press-fitting position is set at a position 0.15 mm deeper than the boundary between the upper plate back surface 31B and the lower plate front surface 32A. The outer diameter of the shoulder 12 is 5.5 mm, and the outer diameter of the pin 11 is 3.35 mm. These rotational speeds are set at 1500 rpm. A distance L between the spot welding position and the end portion of the upper plate 31 is 3 mm. Table 1 and FIG. 20 are based on a so-called stop action test, and are obtained by combining results obtained by stopping press fitting of the shoulder 12 at each data position and measuring the appearance of the end shape of the welded body 3.

In Table 1, the "tool target press-fitting depth" means the final target press-fitting depth of the shoulder 12 based on the lower plate front surface 32A of the lower plate 32. The "clamp" of the pressurizing force input condition is an input condition corresponding to the pressurizing force (kN) of the clamp 13, and "ST2-1" and "ST2-2" are input conditions corresponding to the pressurizing force applied to the shoulder 12. In the examples described later, "ST2-1" and "ST2-2" are changed, but in this experiment, "ST2-1" and "ST2-2" are constant. Furthermore, as described above, the press-fitting pressurizing force of the shoulder 12 with respect to the welded body 3 can be calculated as a difference between the pressurizing force of "ST2-1" and "ST2-2" and the pressurizing force of "clamp". In Table 1, the "end distance" corresponds to a distance L to be described later, and the "presence or absence of a tool taper" indicates the presence or absence of a taper shape formed at the tip of the pin 11 and the shoulder 12.

In addition, in Table 1, the information regarding the target stop position of the shoulder 12 is indicated as the "press-fitting process stop position" and the "backfilling process stop position", respectively (unit: mm). The "press-fitting process stop position" indicated in each data is a stop position in the pressing process, and the "backfilling process stop position" indicated in Data 7 and 8 corresponds to a position where the shoulder 12 is stopped during backfilling after advancing to the maximum pressing position. Note that both are represented by distances based on the surface of the upper plate 31. For example, in the case of Data 7, after the shoulder 12 advances to the maximum pressing amount of 1.21 mm, the test is stopped by backfilling to a position of 0.5 mm from the interface between the upper plate 31 and the lower plate 32 and 0.6 mm from the surface of the upper plate 31.

As illustrated in FIG. 20, after the shoulder 12 is press-fitted from the upper plate front surface 31A of the upper plate 31, it is confirmed that the end deformation amount linearly increases up to the lower plate front surface 32A of the lower plate 32 indicated by a one-dot chain line. After the shoulder 12 comes into contact with the lower plate 32 made of a steel plate, deformation of the end portion is limited. From this, the present inventors have inferred that the excessive pressurizing force acting on the upper plate 31 made of a relatively soft aluminum alloy is a cause of the end deformation, and have newly conceived improving the above-described press-fitting process.

### [Variable Pressure Control]

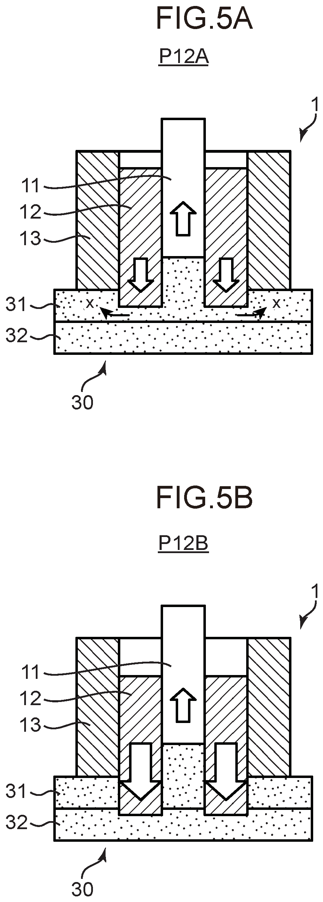

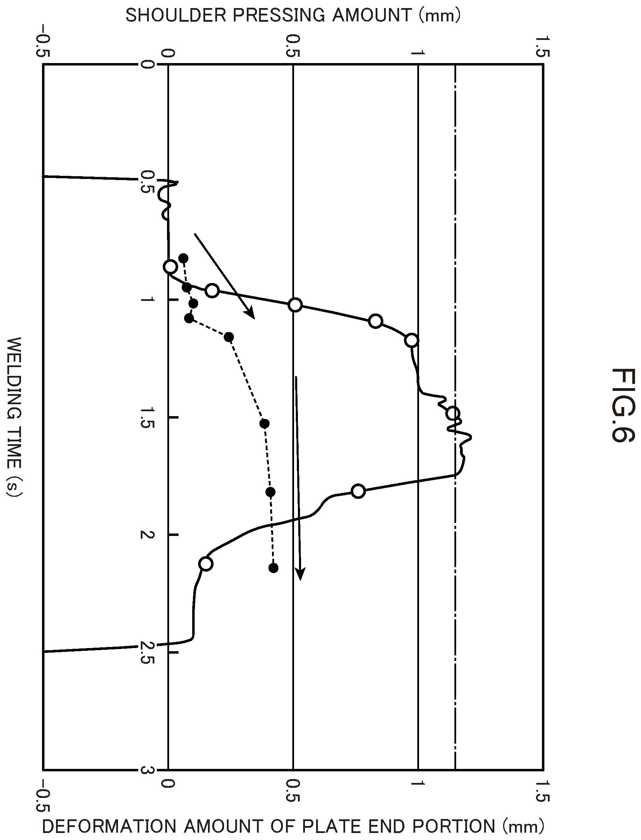

FIGS. 5A and 5B are diagrams for explaining a part of the shoulder-preceding process in the friction stir spot welding method according to the present embodiment. FIG. 6 is a graph illustrating the transition of the shoulder pressing amount and the deformation amount of the plate end portion for explaining the friction stir spot welding method according to the present embodiment. Table 2 shows experimental data corresponding to the graph of FIG. 6. The meaning of each parameter shown in Table 2 is the same as that in Table 1.

**[Table 2]**

| Data | Press-fitting process stop position | Backfilling process stop position | Tool target press-fitting depth | Pressurization input condition | | | Other conditions | | | | | | | | Stop time | End deformation amount |
|---|---|---|---|---|---|---|---|---|---|---|---|---|---|---|---|---|
| | | | | Clamp | ST2-1 | ST2-2 | Rotational speed | End distance | Upper plate | Upper plate thickness | Lower plate | Lower plate thickness | Tool diameter | Presence/absence of tool tapper | | |
| 1 | 0 | | +0.15 | 7 | 10 | 14.7 | 1500 | 3 | 6000-series A1 | 1.1 | 1.2 GPa-class steel | 1.2 | *ϕ* 5.5-3.35 | Presence | 0.832 | 0.059 |
| 2 | 0.2 | | +0.15 | 7 | 10 | 14.7 | 1500 | 3 | 6000-series A1 | 1.1 | 1.2 GPa-class steel | 1.2 | *ϕ* 5.5-3.35 | Presence | C.96 | 0.075 |
| 3 | 05 | | +015 | 7 | 10 | 14.7 | 1500 | 3 | 6000-series A1 | 1.1 | 1.2 GPa-class steel | 1.2 | *ϕ* 5 5-3 35 | Presence | 1 024 | 0.102 |
| 4 | 0.8 | | 0.15 | 7 | 10 | 14.7 | 1500 | 3 | 6000-series A1 | 1.1 | 1.2 GPa-class steel | 1.2 | *ϕ* 5.5 3.35 | Presence | 1.088 | 0.083 |
| 5 | 1.06 | | +015 | 7 | 10 | 14.7 | 1500 | 3 | 6000-series A1 | 11 | 1.2 GPa-class steel | 1.2 | *ϕ* 5.5-3.35 | Presence | 1 168 | 0244 |
| 6 | 1.21 | | 0.15 | 7 | 10 | 14.7 | 1500 | 3 | 6000-series A1 | 1.1 | 1.2 GPa-class steel | 1.2 | *ϕ* 5.5 3.35 | Presence | 1.536 | 0.386 |
| 7 | 1.21 | 06 | +0.15 | 7 | 10 | 14.7 | 1500 | 3 | 6000-series A1 | 1.1 | 1.2 GPa-class steel | 1.2 | *ϕ* 5.5-3.35 | Presence | 1.824 | 0.406 |
| 8 | 1.21 | 0 | +0.15 | 7 | 10 | 14.7 | 1500 | 3 | 6000-series A1 | 1.1 | 1.2 GPa-class steel | 1.2 | *ϕ* 5.5-3.35 | Presence | 2.144 | 0.417 |

In the present embodiment, the press-fitting process of process P12 of FIG. 2 and step S3 of FIG. 3 includes two processes. Specifically, in process P12A illustrated in FIG. 5A as a first stage, the shoulder 12 is press-fitted to a predetermined reference position at a first pressure. For example, the reference position is an interface between the upper plate back surface 31B of the upper plate 31 and the lower plate front surface 32A of the lower plate 32 before press-fitting. Thereafter, in process P12B illustrated in FIG. 5B, the shoulder 12 is press-fitted at a second pressure from the reference position to a predetermined press-fitting position. The pressure change from the first pressure to the second pressure and the press-fitting of the shoulder 12 are continuously performed. FIG. 6 is a graph corresponding to FIG. 20, illustrating the transition of the shoulder pressing amount and the deformation amount of the plate end portion at this time. Also in the experiment of FIG. 6, similarly to FIG. 20, the upper plate 31 is a 6000-series aluminum alloy having a plate thickness of 1.1 mm, and the lower plate 32 is a 1.2 GPa-class steel plate having a plate thickness of 1.2 mm. In this case, since the hardness of the upper plate 31 is lower than the hardness of the lower plate 32, the first pressure is set to be smaller than the second pressure. As an example, the first pressure is 3 kN and the second pressure is 7.7 kN (see the pressurizing force input conditions in Table 2). The other experimental conditions are the same as those in FIG. 20.

As illustrated in FIG. 6, after the shoulder 12 is press-fitted from the upper plate front surface 31A of the upper plate 31 with a relatively low pressurizing force, it has been confirmed that the end deformation amount is greatly reduced as compared with FIG. 20 up to the lower plate front surface 32A of the lower plate 32 indicated by a one-dot chain line. Even after the shoulder 12 comes into contact with the lower plate 32 made of a steel plate, deformation of the end portion remains small. As described above, it has been found that by lowering the press-fitting load of the shoulder 12 in the upper plate 31 on the low hardness side, the flow of the material as indicated by the solid arrow of process P12A in FIG. 5A is suppressed, and the deformation of the welded body 3 can be greatly suppressed. In FIGS. 5A and 5B, as an example, the overflowing material is filled until reaching the tip of the pin 11 at the time of press-fitting the shoulder 12. However, in the backfilling process of process P13 of FIG. 2, the pin 11 may be raised to such an extent that the material does not contact the tip of the pin 11 in FIGS. 5A and 5B in order to facilitate the material inflow below the shoulder 12.

Based on the above idea, the inventors of the present disclosure have found that deformation of the end portions of the upper plate 31 and the lower plate 32 and excessive generation of the indent 4T can be suppressed. Specifically, when the hardness of the upper plate 31 is lower than the hardness of the lower plate 32, the first pressure is set to be smaller than the second pressure, and when the hardness of the upper plate 31 is higher than the hardness of the lower plate 32, the first pressure is set to be larger than the second pressure.

Then, in process P12 of FIG. 2, in a state where the pin 11 is retracted with respect to the upper plate front surface 31A, the shoulder 12 is press-fitted from the upper plate front surface 31A at the first pressure until reaching a predetermined reference position set with reference to the lower plate front surface 32A. Furthermore, the shoulder 12 is press-fitted at the second pressure from the reference position to a press-fitting position deeper than the lower plate front surface 32A.

In this case, it is desirable to set the reference position in a range from a boundary between upper plate back surface 31B and lower plate front surface 32A to 73% of a plate thickness of a member having low hardness out of the upper plate 31 and the lower plate 32. Note that the switching of the pressurizing force may be performed on a member side having high hardness.

When the upper plate 31 has hardness lower than hardness of the lower plate 32, the first pressure and the second pressure are desirably set to satisfy P1/P2 < 0.91, where P1 is the first pressure and P2 is the second pressure. In addition, it is more desirable to set the first pressure and the second pressure so as to satisfy P1/P2 < 0.7, and it is still more desirable to set the first pressure and the second pressure so as to satisfy P1/P2 ≤ 0.65.

Furthermore, assuming that the cross-sectional area of the pin 11 is P and the cross-sectional area of the shoulder 12 is S, it is desirable to set the outer diameters of the pin 11 and the shoulder 12 so as to satisfy S/P ≤ 2.41.

Further, it is more desirable to set the outer diameters of the pin 11 and the shoulder 12 so as to satisfy S/P ≤ 1.8.

Furthermore, the pin 11 and the shoulder 12 may be disposed to face the overlapping portion 30 such that the shortest distance L between the outer peripheral edge of the shoulder 12 and the end portion of the upper plate 31 when the shoulder 12 abuts on the upper plate front surface 31A at the time of press-fitting is 8 mm or less.

### Examples

Hereinafter, the present disclosure will be described in more detail based on examples. Note that the present disclosure is not limited to the following examples.

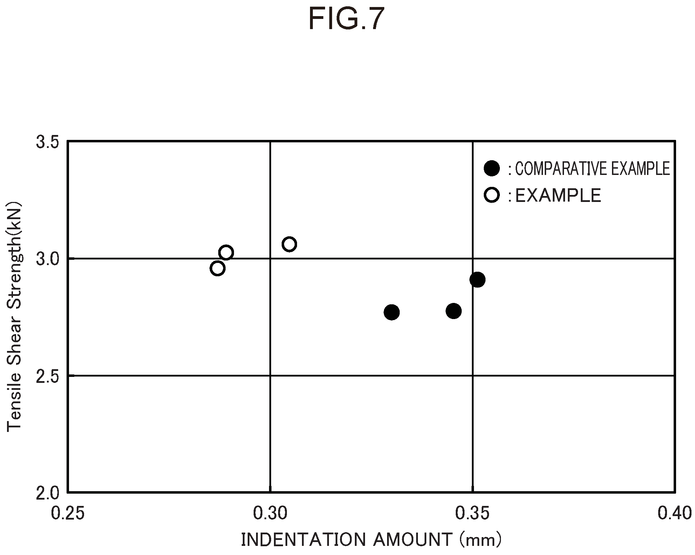

FIG. 7 is a graph illustrating a relationship between an indentation amount and a TSS (Tensile Shear Strength) for explaining an example of the friction stir spot welding method according to the present disclosure. Table 3 shows experimental data corresponding to the graph of FIG. 7. Data 1 to 3 in Table 3 are comparative examples, and Data 4 to 6 are examples. The "reference position input condition" (mm) means a reference position set with reference to the upper plate front surface 31A of the upper plate 31. "Adhesive application" means the presence or absence of an adhesive applied between the upper plate 31 and the lower plate 32.

**[Table 3]**

| Data | Reference position input condition | Tool target press-fitting depth | Pressurization input condition | | | Other conditions | | | | | | | | Adhesive application | Indent (mm) | TSS (kN) | Breakage shape |
|---|---|---|---|---|---|---|---|---|---|---|---|---|---|---|---|---|---|
| | | | Clamp | ST2 1 | ST2 2 | Rotational speed | End distance | Upper plate | Upper plate thickness | Lower plate | Lower plate thickness | Tool diameter | Presence/absence of tool tapper | | | | |
| 1 | | +0.15 | 7 | 14.7 | 14.7 | 2000 | - | 6000-series A1 | 1.1 | 1.2 GPa-class steel | 1.2 | *ϕ* 5.5-3.35 | Presence | Absence | 0.35 | 2.79 | Plug |
| 2 | | +0.15 | 7 | 14.7 | 14.7 | 2000 | - | 6000-series A1 | 1.1 | 1.2 GPa-class steel | 1.2 | *ϕ* 5.5-3 35 | Presence | Absence | 0.33 | *2.77* | Plug |
| 3 | | +0.15 | 7 | 147 | 147 | 2000 | - | 6000-series A1 | 1.1 | 1.2 GPa-class steel | 1.2 | *ϕ* 5.5-3.35 | Presence | Absence | 0.35 | 291 | Plug |
| 4 | 1.06 | +0 15 | 7 | 12 | 147 | 2000 | - | 6000-series A1 | 11 | 1.2 GPa-class steel | 1 2 | *ϕ* 5.5-3.35 | Presence | Absence | 0.29 | 2.96 | Plug |
| 5 | 1.06 | +0.15 | 7 | 12 | 14.7 | 2000 | - | 6000-series A1 | 1.1 | 1.2 GPa-class steel | 1.2 | *ϕ* 5.5-3.35 | Presence | Absence | 0.29 | 3.03 | Plug |
| 6 | 1.06 | +0.15 | 7 | 12 | 14.7 | 2000 | - | 6000-series A1 | 1.1 | 1.2 GPa-class steel | 1.2 | *ϕ* 5.5-3 35 | Presence | Absence | 0.30 | 3.06 | Plug |

The TSS corresponds to a so-called tensile shear strength, and indicates a load when breaking occurs in the stir welded portion 4 when the upper plate 31 and the lower plate 32 are pulled in mutually opposite directions parallel to the upper plate front surface 31A with respect to the welded body 3 after the stir welded portion 4 is formed. That is, the larger the value of TSS, the higher the tensile shear strength.

In the experiment illustrated in FIG. 7, the upper plate 31 is a 6000-series aluminum alloy having a plate thickness of 1.1 mm, and the lower plate 32 is a 1.2 GPa-class steel plate having a plate thickness of 1.2 mm. That is, the upper plate 31 and the lower plate 32 are metals having different main elements. The rotational speed of the tool 1 is 2000 rpm, the outer diameter of the shoulder 12 is 5.5 mm, and the outer diameter of the pin 11 is 3.35 mm. In the comparative example, regardless of the position of the shoulder 12, the press-fitting pressurizing force of the shoulder 12 is 7.7 kN. On the other hand, in the example, the depth of 1.06 mm from the upper plate front surface 31A is set as the reference position, the press-fitting pressurizing force on the upper plate 31 side of the reference position is set to 5 kN, and the press-fitting pressurizing force on the lower plate 32 side is set to 7.7 kN. The reference position in this case substantially corresponds to an interface between the upper plate back surface 31B and the upper plate front surface 31A. The press-fitting position of the shoulder 12 is set to a depth of 0.15 mm from the lower plate front surface 32A. In addition, in the above-described leveling process, by disposing a shoulder lower surface portion 12S of the shoulder 12 and a pin lower surface portion 11S of the pin 11 slightly below the upper plate front surface 31A, the indent 4T of about 0.30 mm at maximum is intended to be formed.

As illustrated in FIG. 7, in the comparative example in which the pressurizing force of the shoulder 12 in the press-fitting process is constant, the indent 4T having a depth of about 0.33 mm or more and 0.35 mm or less larger than the target value has been formed. This phenomenon is presumed to be caused by the fact that a part of the material is pushed radially outward when the shoulder 12 is press-fitted, and a sufficient overflowing material OF does not flow into the hollow space of the shoulder 12 illustrated in process P12 of FIG. 2. When the overflowing material OF in the hollow space is insufficient, the material is also insufficient in the backfilling process, and the indent 4T deeper than the intended indent is formed. As described above, when the shoulder 12 is press-fitted, a part of the material is pushed radially outward, which leads to the deformation of the welded body 3 described above.

On the other hand, in the example in which the press-fitting pressurizing force to the relatively soft upper plate 31 has been reduced, the indent 4T has been distributed in the vicinity of the target 0.30 mm, and the value of the TSS has been larger than that in the comparative example. When the indent 4T is formed deeper than the intended depth, a fracture so-called plug fracture, in which a crack is generated in the thickness direction between the end portion of the indent 4T and the lower plate 32, is likely to occur. Therefore, as illustrated in FIG. 7, in the comparative example, the TSS is relatively smaller than that in the example.

As described above, it has been confirmed that the intended indent 4T can be obtained and the strength of the joint portion including the stir welded portion 4 is improved by setting an appropriate press-fitting pressurizing force according to the hardness of the plate material.

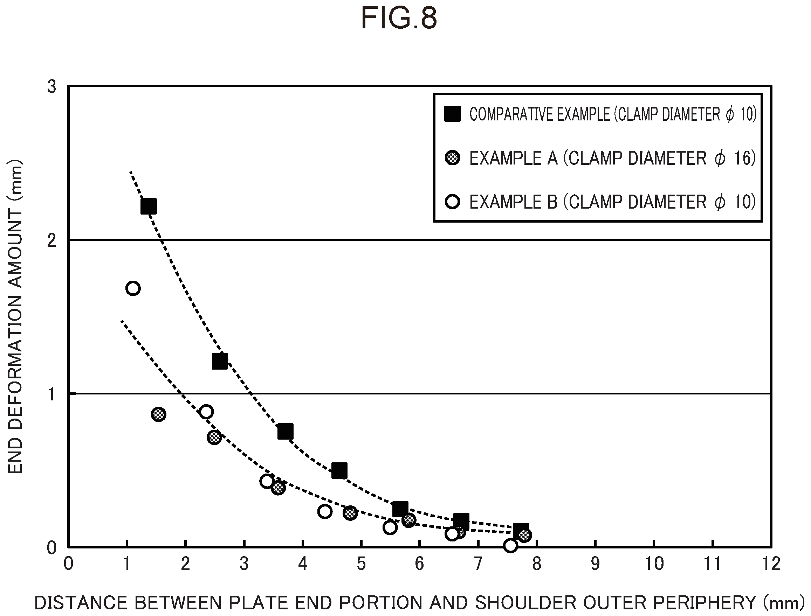

FIG. 8 is a graph illustrating a relationship between a distance from the plate end portion of the welded body 3 to the outer periphery of the shoulder 12 and an end deformation amount for explaining an example of the friction stir spot welding method according to the present disclosure. The distance from the plate end portion to the outer periphery of the shoulder 12 is indicated by a distance L in FIG. 18 described above. Table 4 shows the conditions of the experimental data corresponding to the graph of FIG. 8.

**[Table 4]**

| Data | Reference position input condition | Tool target press-fitting depth | Pressurization input condition | | | Other conditions | | | | | | | | P1 (kN) | P2 (kN) |
|---|---|---|---|---|---|---|---|---|---|---|---|---|---|---|---|
| | | | Clamp | ST2-1 | ST2-2 | Rotational speed | End distance | Upper plate | Upper plate thickness | Lower plate | Lower plate thickness | Tool diameter | Presence/absence of tool tapper | | |
| Comparative example | | +0.15 | 5 | 11 | 11 | 2000 | - | 6000-series A1 | 1.1 | 1.2 GPa-class steel | 1.2 | *ϕ* 5.5-3.35 | Absence | 6 | 6 |
| Example A | 0.8 | +0.15 | 5 | 7.5 | 11 | 2000 | - | 6000-series A1 | 1.1 | 1.2 GPa-class steel | 1.2 | *ϕ* 5.5-3.35 | Absence | 2.5 | 6 |
| Example B | 0.8 | +0.15 | 5 | 7.5 | 11 | 2000 | - | 6000-series A1 | 1.1 | 1.2 GPa-class steel | 1.2 | *ϕ* 5.5-3.35 | Absence | 2.5 | 6 |

In the experiment illustrated in FIG. 8, the materials and the plate thicknesses of the upper plate 31 and the lower plate 32, and the outer diameters of the pin 11 and the shoulder 12 are similar to those in the experiment illustrated in FIG. 7. In the comparative example, the press-fitting pressurizing force of the shoulder 12 is 6 kN regardless of the press-fitting position. Furthermore, the outer diameter of the clamp 13 is set to 16 mm in Example A, and the outer diameter of the clamp 13 is set to 10 mm in the comparative example and Example B. In Examples A and B, the depth of 0.8 mm from the upper plate front surface 31A is set as the reference position, the press-fitting pressurizing force on the upper plate 31 side is set to 2.5 kN, and the press-fitting pressurizing force on the lower plate 32 side is set to 6 kN. The other conditions are the same as those in the experiment of FIG. 7.

As illustrated in FIG. 8, it has been confirmed that the deformation amount of the end portion of the welded body 3 has been reduced in Examples A and B regardless of the outer diameter of the clamp 13 as compared with the comparative example. In particular, even under severe conditions where the distance L is 8 mm or less where the stir welded portion 4 approaches the end portion of the welded body 3, the deformation amount can be greatly reduced by controlling the pressurizing force. Therefore, the pin 11 and the shoulder 12 may be disposed to face the overlapping portion such that the shortest distance L between the outer peripheral edge of the shoulder 12 and the end portion of the upper plate 31 when the shoulder 12 abuts on the upper plate front surface 31A at the time of press-fitting is 8 mm or less.

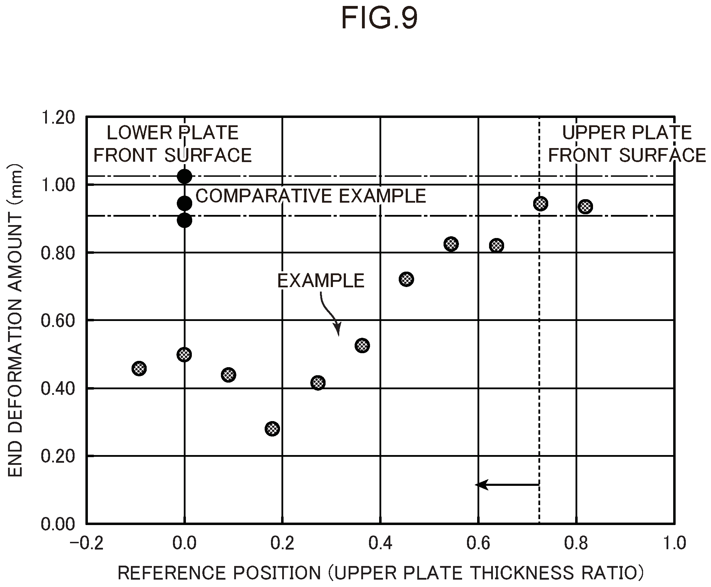

FIG. 9 is a graph illustrating a relationship between a reference position and an end deformation amount for explaining an example of the friction stir spot welding method according to the present disclosure. Table 5 shows experimental data corresponding to the graph of FIG. 9. The "distance from the upper and lower plate interfaces" in Table 5 assumes that the reference position 1.06 is the upper and lower plate interfaces, and indicates the difference in the reference position input condition with respect to 1.06 as the distance from the upper and lower plate interfaces. For example, in the case of the second embodiment from the top, since the reference position input condition is 0.96, the distance from the upper and lower plate interfaces is 1.06 - 0.96 = 0.10.

**[Table 5]**

| Data | Reference position input condition | Tool target press-fitting depth | Pressurization input condition | | | Other conditions | | | | | | | | Distance from boundary between upper/lower plates | Reference position (upper plate thickness ratio) | End deformation amount (mm) |
|---|---|---|---|---|---|---|---|---|---|---|---|---|---|---|---|---|
| | | | Clamp | ST2-1 | ST2-2 | Rotational speed | End distance | Upper plate | plate thickness | Lower plate | Lower plate thickness | Tool diameter | Presence/absence of tool tapper | | | |
| Comparative example | | +0.15 | 7 | 14.7 | 14.7 | 1500 | 3 | 6000-series A1 | 1.1 | 1.2 GPa-class steel | 1.2 | *ϕ* 5.5-3.35 | Presence | 0.00 | 0.00 | 0.89 |
| Comparative example | | +0.15 | 7 | 14.7 | 14.7 | 1500 | 3 | 6000-series A1 | 1.1 | 1.2 GPa-class steel | 1.2 | *ϕ* 5.5-3.35 | Presence | 0.00 | 0.00 | 1.02 |
| Comparative example | | +0.15 | 7 | 14.7 | 14.7 | 1500 | 3 | 6000-series A1 | 1.1 | 1.2 GPa-class steel | 1.2 | *ϕ* 5.5-3.35 | Presence | 0.00 | 0.00 | 0.94 |
| Example | 106 | +0.15 | 7 | 10 | 14.7 | 1500 | 3 | 6000-series A1 | 1.1 | 1.2 GPa-class steel | 1.2 | *ϕ* 5.5-3.35 | Presence | 0.00 | 0.00 | 0.50 |
| Example | 0.96 | +0.15 | 7 | 10 | 14.7 | 1500 | 3 | 6000-series A1 | 1.1 | 1.2 GPa-class steel | 1.2 | *ϕ* 5.5-3.35 | Presence | 0.10 | 0.09 | 0.44 |
| Example | 0.86 | +0.15 | 7 | 10 | 14.7 | 1500 | 3 | 6000-series A1 | 1.1 | 1.2 GPa-class steel | 1.2 | *ϕ* 5.5-3.35 | Presence | 0.20 | 0.18 | 0.28 |
| Example | 0.76 | +0.15 | 7 | 10 | 14.7 | 1500 | 3 | 6000-series A1 | 1.1 | 1.2 GPa-class steel | 1.2 | *ϕ* 5.5-3.35 | Presence | 0.30 | 0.27 | *0.42* |
| Example | 0.66 | +0.15 | 7 | 10 | 14.7 | 1500 | 3 | 6000-series A1 | 1.1 | 1.2 GPa-class steel | 1.2 | *ϕ* 5.5-3.35 | Presence | 0.40 | 0.36 | 0.52 |
| Example | 056 | +0.15 | 7 | 10 | 14.7 | 1500 | 3 | 6000-series A1 | 1.1 | 1.2 GPa-class steel | 1.2 | *ϕ* 5.5-3.35 | Presence | 0.50 | 0.45 | *0.72* |
| Example | 0.46 | +0.15 | 7 | 10 | 14.7 | 1500 | 3 | 6000-series A1 | 1.1 | 1.2 GPa-class steel | 1.2 | *ϕ* 5.5-3.35 | Presence | 0.60 | 0.55 | *0.82* |
| Example | 0.36 | +0.15 | 7 | 10 | 14.7 | 1500 | 3 | 6000-series A1 | 1.1 | 1.2 GPa-class steel | 1.2 | *ϕ* 5.5-3.35 | Presence | 0.70 | 0.64 | 0.82 |
| Example | 0.26 | +0.15 | 7 | 10 | 14.7 | 1500 | 3 | 6000-series A1 | 1.1 | 1.2 GPa-class steel | 1.2 | *ϕ* 5.5-3.35 | Presence | 0.80 | 0.73 | 0.94 |
| Example | 0.16 | +0.15 | 7 | 10 | 14.7 | 1500 | 3 | 6000-series A1 | 1.1 | 1.2 GPa-class steel | 1.2 | *ϕ* 5.5-3.35 | Presence | 0.90 | 0.82 | 0.93 |
| Example | 1 16 | +0.15 | 7 | 12 | 147 | 1500 | 3 | 6000-series A1 | 1 1 | 1.2 GPa-class steel | 1 2 | *ϕ* 5.5-3.35 | Presence | 0 10 | 009 | 0.46 |

In the experiment illustrated in FIG. 9, the materials and the plate thicknesses of the upper plate 31 and the lower plate 32, and the outer diameters of the pin 11 and the shoulder 12 are similar to those in the experiment illustrated in FIG. 7. The distance L illustrated in FIG. 18 is set to 3 mm. The rotational speed of the tool 1 is 1500 rpm, the outer diameter of the shoulder 12 is 5.5 mm, and the outer diameter of the pin 11 is 3.35 mm. In the comparative example, the press-fitting pressurizing force of the shoulder 12 is 7.7 kN regardless of the press-fitting position. In the example, the press-fitting pressurizing force on the upper plate 31 side of the predetermined reference position is set to 3 kN, and the press-fitting pressurizing force on the lower plate 32 side is set to 7.7 kN. For the data with the reference position of -0.09 illustrated on the leftmost side in FIG. 9, the press-fitting pressurizing force on the upper plate 31 side is set to 5 kN, and the press-fitting pressurizing force on the lower plate 32 side is set to 7.7 kN. The other conditions are the same as those in the experiment of FIG. 7. In the example, friction stir spot welding is performed under each condition in which the reference position is sequentially changed in the upper plate 31. The horizontal axis in FIG. 9 indicates the reference position by dividing the distance between the lower plate front surface 32A and the reference position by the plate thickness of the upper plate 31, that is, by the upper plate thickness ratio.

As illustrated in FIG. 9, the deformation amount of the end portion of the welded body 3 in the comparative example is included in the range of 0.89 mm to 1.02 mm. On the other hand, the deformation amount in the example has been smaller than that in the comparative example in the region where the reference position has been 0.73 or less (the left side of the broken line in FIG. 9) in terms of the plate thickness ratio of the upper plate 31.

As described above, not only when the pressurizing force of the shoulder 12 is set low in the entire region of the relatively soft upper plate 31, but also when the pressurizing force is increased during the press-fitting into the upper plate 31, the deformation amount of the end portion of the welded body 3 can be suppressed. However, in order to more reliably suppress the deformation, it is desirable to set a reference position in a region from the lower plate front surface 32A to the upper plate thickness ratio 0.4, more desirably, in a region up to the upper plate thickness ratio 0.35, and to perform pressure press-fitting at a relatively low first pressure on the upper plate 31 side. When it is desired to suppress the deformation amount even to some extent, the reference position may be set in a range up to 73% of the plate thickness of a member having low hardness among the upper plate 31 and the lower plate 32 with a portion where the upper plate back surface 31B and the lower plate front surface 32A are in contact as a reference. Note that the switching of the pressurizing force may be performed on a member side having high hardness.

Further, as illustrated in FIG. 9, in this experiment, it has been confirmed that the end deformation amount has been suppressed to 0.46 mm even when the pressurizing force has been changed to the second pressure at the reference position with the upper plate thickness ratio of - 0.09, in other words, at a depth of 0.10 mm from the lower plate front surface 32A of the lower plate 32. Here, the upper plate thickness ratio illustrating a negative value means that the reference position is set in the lower plate 32. As described above, in the pressurizing force control according to the present invention, it is possible to obtain an effect having robustness that the end deformation amount can be suppressed even if the reference position is disposed with a predetermined variation on any plate side with respect to the portion where the upper plate 31 and the lower plate 32 are in contact with each other.

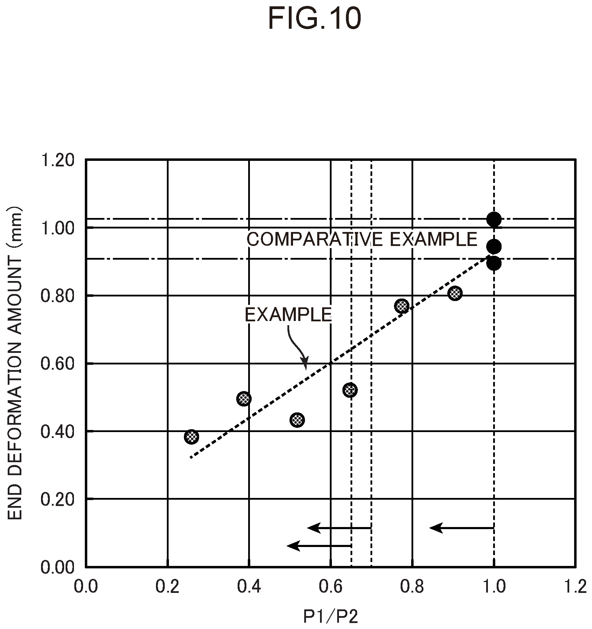

FIG. 10 is a graph illustrating a relationship between a pressure ratio P1/P2 and an end deformation amount for explaining an example of the friction stir spot welding method according to the present disclosure. Table 6 shows experimental data corresponding to the graph of FIG. 10.

**[Table 6]**

| Data | Reference position input condition | Tool target press-fitting depth | Pressurization input condition | | | Other conditions | | | | | | | | P1 (kN) | P2 (kN) | P1/P2 | End deformation amount (mm) |
|---|---|---|---|---|---|---|---|---|---|---|---|---|---|---|---|---|---|
| | | | Clamp | ST2-1 | ST2-2 | Rotational speed | End distance | Upper plate | Upper plate thickness | Lower plate | Lower plate thickness | Tool diameter | Presence/absence of tool | | | | |
| Comparative example | | +0.15 | 7 | 1 4.7 | 14.7 | 1500 | 3 | 6000-series A1 | 1.1 | 1.2 GPa-class steel | 1.2 | *ϕ* 5.5-3.35 | Presence | 7.7 | 7.7 | 1.00 | 0.89 |
| Comparative example | | +0.15 | 7 | 14.7 | 14.7 | 1500 | 3 | 6000-series A1 | 1.1 | 1.2 GPa-class steel | 1.2 | *ϕ* 5.5-3.35 | Presence | 7.7 | 7.7 | 1.00 | 1.02 |
| Comparative example | | +0.15 | 7 | 14.7 | 14.7 | 1500 | 3 | 6000-series A1 | | 1.2 GPa-class steel | 1.2 | *ϕ* 5.5-3.35 | Presence | 7.7 | 7.7 | 1.00 | 0.94 |
| Example | 1.06 | +0.15 | 7 | 14 | 14.7 | 1500 | 3 | 6000-series A1 | 1 | 1.2 GPa-class steel | 1.2 | *ϕ* 5.5-3.35 | Presence | 7 | 7.7 | 091 | 0.81 |
| Example | 1.06 | +0.15 | 7 | 13 | 14.7 | 1500 | 3 | 6000-series A1 | 1.1 | 1.2 GPa-class steel | 1.2 | *ϕ* 5.5-3.35 | Presence | 6 | 7.7 | 0.78 | 0.77 |
| Example | 1.06 | +0.15 | 7 | 12 | 14.7 | 1500 | 3 | 6000-series A1 | 1.1 | 1.2 GPa-class steel | 1.2 | *ϕ* 5.5-3.35 | Presence | 5 | 7.7 | 0.65 | 0.52 |
| Example | 1.06 | +015 | 7 | 11 | 14.7 | 1500 | 3 | 6000-series A1 | 1.1 | 1.2 GPa-class steel | 1.2 | *ϕ* 5.5-3.35 | Presence | 4 | 7 7 | 0.52 | 0.43 |
| Example | 1.06 | +0.15 | 7 | 10 | 14.7 | 1500 | 3 | 6000-series A1 | 11 | 1.2 GPa-class steel | 1.2 | *ϕ* 5.5-3.35 | Presence | 3 | 7.7 | 0.39 | 0.50 |
| Example | 1.06 | +0.15 | 7 | 9 | 14.7 | 1500 | 3 | 6000-series A1 | 1.1 | 1.2 GPa-class steel | 1.2 | *ϕ* 5.5-3.35 | Presence | 2 | 7.7 | 0.26 | 0.39 |

The experiment illustrated in FIG. 10 has the same conditions as the experimental conditions of the example of FIG. 7 except that the magnitude of the pressurizing force and the rotational speed of the shoulder 12 in the example are 1500 rpm. In the example of FIG. 10, the experiment is performed under different conditions in the range of 2 kN to 7 kN for the magnitude of the first pressure P1. The magnitude of the second pressure P2 is 7.7 kN. As a result, P1/P2 in the comparative example is 1.0, and the pressure ratio P1/P2 in the example is 0.26 to 0.91.

As illustrated in FIG. 10, when the first pressure P1 applied to the shoulder 12 in the upper plate 31 is even slightly smaller than the second pressure P2, the effect of suppressing the end deformation amount can be obtained. Furthermore, the smaller the P1/P2, the smaller the end deformation amount can be maintained. For example, when the hardness of the upper plate 31 is lower than the hardness of the lower plate 32, it is desirable to set the first pressure P1 and the second pressure P2 so as to satisfy P1/P2 < 0.91 as indicated by arrows in FIG. 10.

Furthermore, as indicated by the arrow in FIG. 10, the end deformation amount is more desirably reduced by setting the first pressure and the second pressure so as to satisfy P1/P2 < 0.7, and more desirably the end deformation amount is more reliably reduced by setting the first pressure and the second pressure so as to satisfy P1/P2 ≤ 0.65.

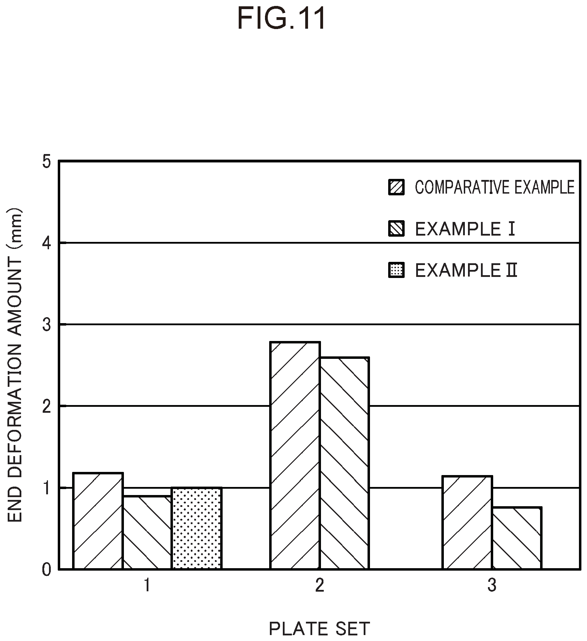

FIG. 11 is a graph illustrating a relationship between a plate set of the upper plate 31 and the lower plate 32 and an end deformation amount for explaining an example of the friction stir spot welding method according to the present disclosure. Table 7 shows experimental data corresponding to the graph of FIG. 11.

**[Table 7]**

| Data | Reference position input condition | Tool target press-fitting depth | Pressurization input condition | | | Other conditions | | | | | | | | Distance from boundary between upper/lower plates | Reference position (upper plate thickness ratio) | End deformation amount (mm) |
|---|---|---|---|---|---|---|---|---|---|---|---|---|---|---|---|---|
| | | | Clamp | ST2-1 | ST2-2 | Rotational speed | End distance | Upper plate | Upper plate thickness | Lower plate | Lower plate thickness | Tool diameter | Presence/absence of tool tapper | | | |
| Comparative example | 1.36 | +0.3 | 5 | 13 | 13 | 2000 | 3 | 6000-series A1 | 1.0 | 5000-series A1 | 2.0 | *ϕ* 6.0-3.25 | Absence | | | 1.18 |
| Example I | 0.96 | +0.3 | 5 | 9 | 13 | 2000 | 3 | 6000-series A1 | 1.0 | 5000-series A1 | 2.0 | *ϕ* 6.0-3.25 | Absence | 0.00 | | 0.89 |
| Comparative example | 2.26 | +1.1 | 5 | 14 | 14 | 2000 | 3 | 5000-series A1 | 1.2 | 6000-series A1 | 3.0 | *ϕ* 6.0-3.25 | Absence | | | 2.77 |
| Example I | 1.16 | +1.1 | 5 | 14 | 12 | 2000 | 3 | 5000-series A1 | 1.2 | 6000-series A1 | 3.0 | *ϕ* 6.0-3.25 | Absence | 0.00 | | 2.58 |
| Comparative example | 3.5 | +0.5 | 5 | 14.7 | 14.7 | 2000 | 3 | 6000-series A1 | 3.0 | 5000-series A1 | 2.0 | *ϕ* 9.0-6.0 | Absence | | | 1.13 |
| Example I | 3 | +0.5 | 5 | 12 | 14.7 | 2000 | 3 | 6000-series A1 | 3.0 | 5000-series A1 | 2.0 | *ϕ* 9.0-6.0 | Absence | 0.00 | | 0.74 |
| Example II | 1.16 | +0.3 | 5 | 9 | 13 | 2000 | 3 | 6000-series A1 | 1.0 | 5000-series A1 | 2.0 | *ϕ* 6.0-3.25 | Absence | -0.20 | -0.20 | 0.99 |

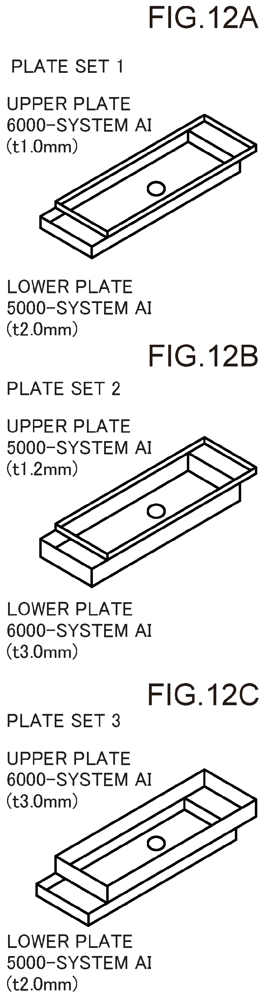

Further, FIGS. 12A, 12B, and 12C are see-through perspective views illustrating types of plate sets for explaining an example of the friction stir spot welding method according to the present disclosure.

As illustrated in FIGS. 12A, 12B, and 12C, a plate set 1, a plate set 2, and a plate set 3 are used in this experiment. In the plate set 1, the upper plate 31 is a 6000-series aluminum alloy having a plate thickness of 1.0 mm, and the lower plate 32 is a 5000-series aluminum alloy having a plate thickness of 2.0 mm. The hardness of the upper plate 31 is relatively lower than the hardness of the lower plate 32. In the plate set 2, the upper plate 31 is a 5000-series aluminum alloy having a plate thickness of 1.2 mm, and the lower plate 32 is a 6000-series aluminum alloy having a plate thickness of 3.0 mm.

The hardness of the upper plate 31 is relatively higher than the hardness of the lower plate 32. Further, in the plate set 3, the upper plate 31 is a 6000-series aluminum alloy having a plate thickness of 3.0 mm, and the lower plate 32 is a 5000-series aluminum alloy having a plate thickness of 2.0 mm. The hardness of the upper plate 31 is relatively lower than the hardness of the lower plate 32.

In the experiments of the plate sets 1 and 2, the rotational speed of the tool 1 is 2000 rpm, the outer diameter of the shoulder 12 is 6.0 mm, and the outer diameter of the pin 11 is 3.25 mm. In the experiment of the plate set 3, the rotational speed of the tool 1 is 2000 rpm, the outer diameter of the shoulder 12 is 9.0 mm, and the outer diameter of the pin 11 is 6.0 mm. In either case, the distance L illustrated in FIG. 18 is set to 3 mm. The press-fitting position of the shoulder 12 is 0.3 mm from the lower plate front surface 32A in the plate set 1, 1.1 mm from the lower plate front surface 32A in the plate set 2, and 0.5 mm from the lower plate front surface 32A in the plate set 3. In Example I, the reference position is in all cases set at the boundary between the upper plate back surface 31B and the lower plate front surface 32A. In Example II, the reference position is set at a position 0.2 mm deeper than the lower plate front surface 32A. In other words, in Example II, the pressurizing force of the shoulder 12 is set to the second pressure in the region from the position 0.2 mm deeper than the lower plate front surface 32A to the final press-fitting position of 0.3 mm.

Regarding the pressurizing force, the press-fitting pressurizing force of the shoulder 12 is set to 8 kN in the comparative example of the plate set 1, and the first pressure P1 is set to 4 kN and the second pressure P2 is set to 8 kN in Examples I and II. In the comparative example of the plate set 2, the press-fitting pressurizing force of the shoulder 12 is set to 9 kN, and in Example I, the first pressure P1 is set to 9 kN and the second pressure P2 is set to 7 kN. In the comparative example of the plate set 3, the press-fitting pressurizing force of the shoulder 12 is set to 9.7 kN, and in Example I, the first pressure P1 is set to 7 kN and the second pressure P2 is set to 9.7 kN.

As illustrated in FIG. 11, in any plate set, it has been confirmed that the end deformation amount can be suppressed in the example in which the press-fitting pressurizing force in the relatively soft plate material is set to be small as compared with the comparative example in which the press-fitting pressurizing force of the shoulder 12 is not changed. In particular, it has been confirmed that this tendency is also applicable to a case where the upper plate 31 and the lower plate 32 are made of dissimilar metals having the same main element, for example, two aluminum alloys having different constituent elements other than aluminum. Furthermore, when the lower plate 32 is relatively softer than the upper plate 31 as in the plate set 2, the end deformation amount can be similarly suppressed by setting the second pressure P2 to be smaller than the first pressure P1.

In FIG. 11, as illustrated in Example II of the plate set 1, it can be confirmed that the reference position for changing the pressurizing force from the first pressure P1 to the second pressure P2 may be closer to the lower plate 32 than the lower plate front surface 32A. This result also coincides with the result of the reference position (upper plate thickness ratio) - 0.09 in FIG. 9 described above.

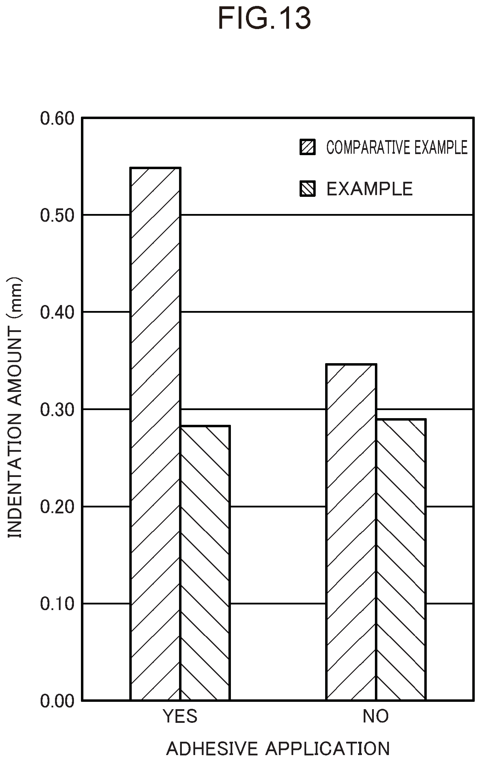

FIG. 13 is a graph illustrating a relationship between the presence or absence of application of an adhesive and the indentation amount for explaining an example of the friction stir spot welding method according to the present disclosure. Table 8 shows experimental data corresponding to the graph of FIG. 13.

**[Table 8]**

| Data | Reference position input condition | Tool target press-fitting depth | Pressurization input condition | | | Other conditions | | | | | | | | Adhesive application | Indent (mm) |
|---|---|---|---|---|---|---|---|---|---|---|---|---|---|---|---|
| | | | Clamp | ST2 1 | ST2 2 | Rotational speed | End distance | Upper plate | Upper plate thickness | Lower plate | Lower plate thickness | Tool diameter | Presence/absence of tool tapper | | |
| Comparative example | 1.06 | +0.15 | 7 | 14.7 | 14.7 | 2000 | - | 6000-series A1 | 1.1 | 1.2 GPa-class steel | 1.2 | *ϕ* 5.5-3.35 | Presence | Presence | 0.55 |
| Example | 1.06 | 0.15 | 7 | 12 | 14.7 | 2000 | - | 6000-series A1 | 1.1 | 1.2 GPa-class steel | 1.2 | *ϕ* 5.5 3.35 | Presence | Presence | 0.28 |
| Comparative example | 1.06 | +0.15 | 7 | 14.7 | 14.7 | 2000 | - | 6000-series A1 | 1.1 | 1.2 GPa-class steel | 1.2 | *ϕ* 5.5-3.35 | Presence | Absence | 0.35 |
| Example | 1.06 | +0.15 | 7 | 12 | 14.7 | 2000 | - | 6000-series A1 | 1.1 | 1.2 GPa-class steel | 1.2 | *ϕ* 5.5-3.35 | Presence | Absence | 0.29 |

Experimental conditions of the comparative example and the example illustrated in FIG. 13 are the same as those in FIG. 7. Under the condition with application of the adhesive, before friction stir spot welding is performed on the upper plate 31 and the lower plate 32, that is, before the shoulder 12 is press-fitted, the adhesive is interposed between the upper plate back surface 31B and the lower plate front surface 32A in advance. As illustrated in FIG. 13, it is confirmed that the indentation amount is suppressed to be smaller in the example than in the comparative example regardless of whether the adhesive is applied. In the comparative example in which the adhesive is applied in advance as described above, the indentation amount greatly increases, and the end deformation amount tends to easily occur accordingly. Even in such a case, the indentation amount can be reduced and the end deformation amount can be suppressed by setting the press-fitting pressurizing force of the shoulder 12 in the relatively soft upper plate 31 to be small. Instead of the adhesive, a sealing material may be interposed between the upper plate back surface 31B and the lower plate front surface 32A in advance. The same applies to the following.

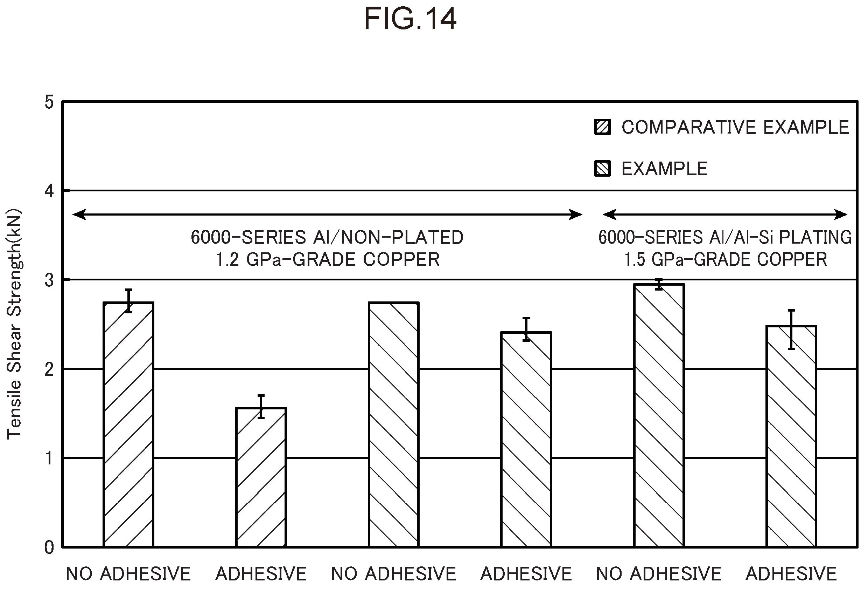

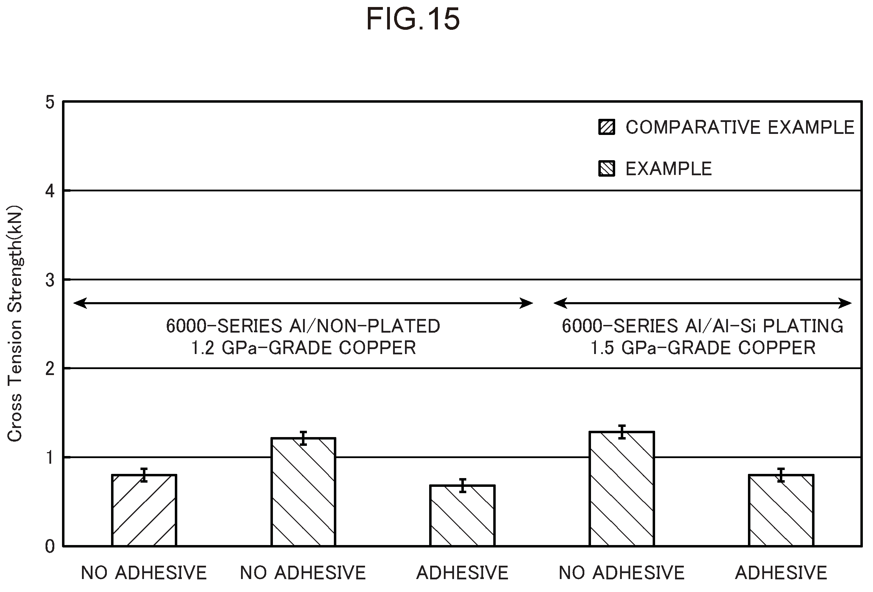

FIG. 14 is a graph illustrating a relationship between the presence or absence of application of an adhesive and the TSS for explaining an example of the friction stir spot welding method according to the present disclosure. Table 9 shows experimental data corresponding to each graph in FIG. 14 and FIG. 15 described later. In Table 9, indentations of the TSS joint and the CTS joint are individually described.

**[Table 9]**

| Data | Reference position input condition | Tool target press-fitting depth | Pressurization input condition | | | Other conditions | | | | | | | P1 (kN) | P2 (kN) | Adhesive application | Average joint strength Average indent | | | |
|---|---|---|---|---|---|---|---|---|---|---|---|---|---|---|---|---|---|---|---|
| | | | Clamp | ST2-1 | ST2-2 | Rotational speed | Upper plate | Upper plate thickness | Lower plate | Lower plate thickness | Tool diameter | Presence/absence of tool tapper | | | | TSS | CTS | TSS | CTS |
| Comparative example | | +0.15 | 7 | 14.7 | 14.7 | 2000 | 6000-series A1 | 1.1 | 1.2 GPa-class steel | 1.2 | *ϕ* 5.5-3.35 | Presence | 7.7 | 7.7 | Absence | 2.74 | 0.81 | 0.39 | 0.34 |
| Comparative example | | +0.15 | 7 | 147 | 14.7 | 2000 | 6000-series A1 | 1.1 | 1.2 GPa-class steel | 1.2 | *ϕ* 5.5-3.35 | Presence | 7.7 | 7.7 | Presence | 1.56 | | 0.59 | |
| Example | 106 | +0.15 | 5 | 8 | 12.7 | 2000 | 6000-series A1 | 1.1 | 1.2 GPa-class steel | 1.2 | *ϕ* 5.5-3.35 | Presence | 3 | 7.7 | Absence | 2.74 | 1.22 | 0.25 | 0.25 |
| Example | 1.06 | +0.15 | 5 | 8 | 12.7 | 2000 | 6000-series A1 | 1.1 | 1.2 GPa-class steel | 1.2 | *ϕ* 5.5-3.35 | Presence | 3 | 7.7 | Presence | 2.40 | 0.69 | 0.33 | 0.30 |
| Example | 1.06 | +0.15 | 5 | 8 | 12.7 | 2000 | 6000-series A1 | 1.1 | Al-Si plated 1.5 GPa-class steel | 1.4 | *ϕ* 5.5-3.35 | Presence | 3 | 7.7 | Absence | 2.94 | 1.29 | 023 | 0.24 |
| Example | 1.06 | 0.15 | 5 | 8 | 12.7 | 2000 | 6000-series A1 | 1.1 | Al-Si plated 1.5 GPa-class steel | 1.4 | *ϕ* 5.5 3.35 | Presence | 3 | 7.7 | Presence | 2.48 | 0.78 | 0.29 | 0.32 |

As also illustrated in FIG. 14, in the left four graphs of this drawing, similarly to FIG. 7, the upper plate 31 is a 6000-series aluminum alloy having a plate thickness of 1.1 mm, and the lower plate 32 is a 1.2 GPa-class steel plate having a plate thickness of 1.2 mm. The steel plate is not plated. In the comparative example, regardless of the position of the shoulder 12, the press-fitting pressurizing force of the shoulder 12 is 7.7 kN. In the example, the depth of 1.06 mm from the upper plate front surface 31A is set as the reference position, the press-fitting pressurizing force on the upper plate 31 side of the reference position is set to 3 kN, and the press-fitting pressurizing force on the lower plate 32 side is set to 7.7 kN. The other conditions are similar to those in FIG. 7.

On the other hand, in the right two graphs of FIG. 14, the upper plate 31 is a 6000-series aluminum alloy having a plate thickness of 1.1 mm, and the lower plate 32 is Al-Si plated 1.5 GPa-class steel having a plate thickness of 1.4 mm. Conditions of the press-fitting pressurizing force, the reference position, and the press-fitting position are similar to those described above.

As illustrated in FIG. 14, in a case where the adhesive is not applied in the comparative example, although the performance of the predetermined TSS is satisfied, the performance of the TSS is deteriorated when the adhesive is applied. As described above, this phenomenon also corresponds to an increase in the indentation amount. On the other hand, as shown in examples, it has been confirmed that the performance of the TSS is improved when the press-fitting pressurizing force of the shoulder 12 in the upper plate 31 is set to be small even in a state where the adhesive is applied. Even when Al-Si plated 1.5 GPa-class steel having a plate thickness of 1.4 mm has been used as the lower plate 32, similar performance could be obtained.

In any case, the increase in the indentation amount can be suppressed regardless of the presence or absence of the adhesive, and the strength of the welded body 3 can be recovered.

FIG. 15 is a graph illustrating a relationship between presence/absence of application of an adhesive and cross tension strength (CTS) for explaining an example of the friction stir spot welding method according to the present disclosure. Various conditions of the experiment in each graph of FIG. 15 are the same as those in FIG. 14. The CTS on the vertical axis in FIG. 15 has a cross tension strength, and the upper plate 31 and the lower plate 32 are overlapped in a cross shape in plan view, and the stir welded portion 4 is formed at the intersection. The CTS corresponds to a load that causes breakage when the upper plate 31 and the lower plate 32 are then pulled up and down.

As illustrated in FIG. 15, it has been confirmed that under the condition that the lower plate 32 has been a non-plated 1.2 GPa-class steel plate and an adhesive has been not applied, the performance of the CTS has been improved in example as compared with the comparative example, and the strength of the stir welded portion 4 has been improved. In addition, also in examples, it has been confirmed that the performance of the CTS has been slightly deteriorated by the application of the adhesive.

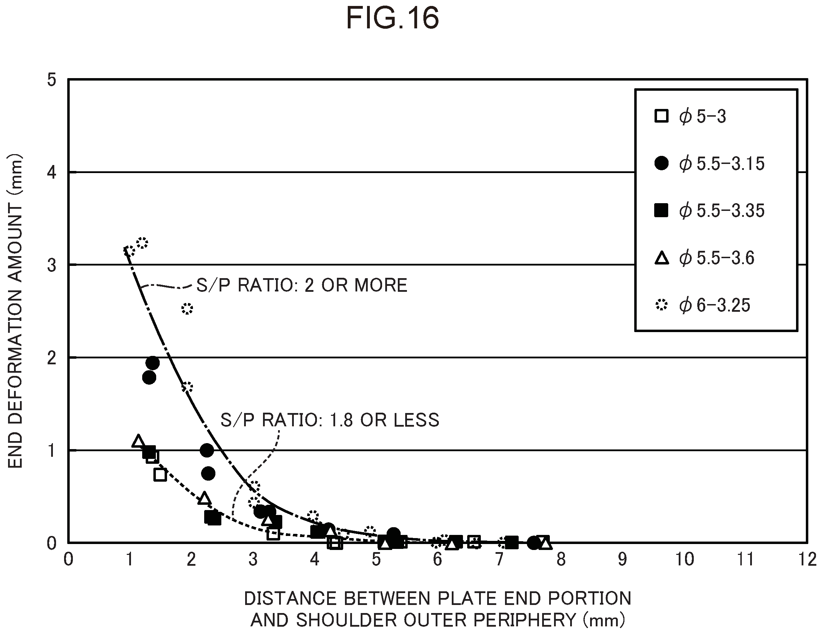

FIG. 16 is a graph illustrating a relationship between a distance L from a plate end portion to an outer periphery of a shoulder and an end deformation amount for explaining an example of the friction stir spot welding method according to the present disclosure. Table 10 shows experimental data corresponding to the graph of FIG. 16.

**[Table 10]**

| Data | Tool target press-fitting depth | Pressurization input condition | | | Other conditions | | | | | | | P1 (kN) | P2 (kN) |
|---|---|---|---|---|---|---|---|---|---|---|---|---|---|
| | | Clamp | ST2-1 | ST2-2 | Rotational speed | Upper plate | Upper plate thickness | Lower plate | Lower plate thickness | Tool diameter | Presence/absence of tool tapper | | |
| 1 | +0.0 | 5 | 8.8 | 8.8 | 2000 | 6000-series A1 | 1 | 980 MPa-class steel | 1.2 | *ϕ* 5-3 | Absence | 3.8 | 3.8 |
| | +0.15 | 5 | 9.8 | 9.8 | 2000 | 6000-series A1 | 1 | 980 MPa-class steel | 1.2 | *ϕ* 5.5-3.15 | Absence | 4.8 | 4.8 |
| 2 3 | +0.15 | 7 | 11.8 | 11.8 | 2000 | 6000-series A1 | 1 | 980 MPa-class steel | 1.2 | *ϕ* 5.5-3.35 | Absence | 4.8 | 4.8 |
| 4 | +0.15 | 7 | 11.8 | 11.8 | 2000 | 6000-series A1 | 1 | 980 MPa-class steel | 1.2 | *ϕ* 5.5-3.6 | Absence | 4.8 | 4.8 |
| 5 | +0.08 | 5 | 10 | 10 | 2000 | 6000-series A1 | 1 | 980 MPa-class steel | 1.2 | *ϕ* 6-3.25 | Absence | 5 | 5 |

In the graph of FIG. 16, experimental data in which the press-fitting pressurizing force of the shoulder 12 is set to be small in different combinations for the outer diameter of the pin 11 and the outer diameter of the shoulder 12 is illustrated. φ5-3 in the legend of the graph means a combination in which the outer diameter of the shoulder 12 is 5 mm and the outer diameter of the pin 11 is 3 mm. The inner diameter of the shoulder 12 is substantially equal to the outer diameter of the pin 11, and both are set to be relatively movable and rotatable. The same applies to other combinations of outer diameters in the graph. In addition, the S/P ratio in FIG. 16 means a cross-sectional area ratio of the pin 11 and the shoulder 12 when the cross-sectional area of the pin 11 is P and the cross-sectional area of the shoulder 12 is S. For each condition shown in the legend of FIG. 16, the S/P ratios are 1.78, 2.05, 1.70, 1.33, and 2.41 in order from the top.

Under any condition, the rotational speed of the tool 1 is 2000 rpm. The upper plate 31 is made of 6000-series aluminum alloy having a plate thickness of 1.0 mm, and the lower plate 32 is made of 980 MPa-class steel having a plate thickness of 1.2 mm. Other press-fitting pressurization conditions and the like are the same as those in FIG. 7.

Referring to FIG. 16, it has been confirmed that the end deformation amount of the welded body 3 can be suppressed under each condition where the S/P ratio is 0 or more and 2.41 or less including the case of φ6-3.25 where the S/P ratio is the largest. In addition, in the region where the S/P ratio has been 0 or more and 1.8 or less, it has been confirmed to be particularly effective for suppressing the end deformation amount. Therefore, it is particularly desirable to set the outer diameters of the shoulder 12 and the pin 11 to satisfy such conditions.

Table 11 shows exemplary dimensions of the shoulder 12 and the pin 11 according to each example described above. Under these conditions, it has been confirmed that the deformation of the end portion of the lower plate 32 and the excessive generation of the indent 4T can be suppressed by controlling the first pressure and the second pressure. Each of the diameters is in mm.

**[Table 11]**

| Data | Shoulder diameter | Pin diameter | Cross-sectional area of shoulder | Cross-sectional area of pin | S/P ratio |
|---|---|---|---|---|---|
| 1 | 5.5 | 3.35 | 59.8 | 35.3 | 1.70 |
| 2 | 6 | 3.6 | 72.4 | 40.7 | 1.78 |
| 3 | 6 | 3.25 | 79.9 | 33.2 | 2.41 |
| 4 | 9 | 6 | 141.4 | 113.1 | 1.25 |

In addition, exemplary dimensions of the shoulder and the pin according to each comparative example described above are shown in Table 12.

**[Table 12]**

| Data | Shoulder diameter | Pin diameter | Cross-sectional area of shoulder | Cross-sectional area of pin | S/P ratio |
|---|---|---|---|---|---|
| 1 | 5 | 3 | 50.3 | 28.3 | 1.78 |
| 2 | 5.5 | 3.15 | 63.9 | 31.2 | 2.05 |
| 3 | 5.5 | 3.35 | 59.8 | 35.3 | 1.70 |
| 4 | 5.5 | 3.6 | 54.3 | 40.7 | 1.33 |
| 5 | 6 | 3.25 | 79.9 | 33.2 | 2.41 |

Furthermore, the inventor of the present disclosure has confirmed that the effect of the present disclosure is particularly exhibited in the following range including the above examples.
· Thicknesses of the upper plate 31 and the lower plate 32: 0.5 mm or more and 5 mm or less, more desirably 1 mm or more and 3 mm or less
· Rotational speed of tool: 500 rpm or more and 3000 rpm or less, more desirably 1500 rpm or more and 2000 rpm or less

### <Modified Embodiment>

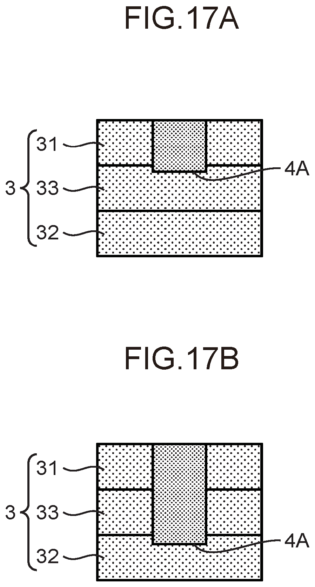

In the embodiments and examples described above, the upper plate 31 and the lower plate 32 have been described to be welded by softening with frictional heat, but the present disclosure is not limited thereto. FIGS. 17A and 17B are schematic views of a welded body for explaining a friction stir spot welding method according to a modified embodiment of the present disclosure. The present disclosure is also applicable to one in which three or more plate materials are stacked and welded.

Specifically, as illustrated in FIG. 17A, the present disclosure may be applied to a welded body in which only the upper two sheets are welded and the third sheet is installed under the welded body. In FIG. 17A, the upper plate 31 and a middle plate 33 are welded by friction stir spot welding to form a welded bottom surface 4A. On the other hand, the lower plate 32 is jointed to the middle plate 33 by spot welding, an adhesive, or the like. Also in this case, the pressure input may be adjusted according to the relationship in hardness between the upper plate 31 and the middle plate 33.

In addition, as illustrated in FIG. 17B, there may be two sheets of materials corresponding to the upper plate, and these sheets may be welded together with the third sheet of steel. For example, if the upper plate 31 and the middle plate 33 are made of the same material, they may be press-fitted as they are without changing the pressure input therebetween. On the other hand, if the upper plate 31 and the middle plate 33 are made of different materials, it is desirable to press the upper plate 31 and the middle plate 33 by changing the pressure. Furthermore, if the upper plate 31, the middle plate 33, and the lower plate 32 are made of different materials, it is desirable that the pressure input is changed in three stages. For example, when the hardness of each member is medium, small, or large from the upper plate 31 side, the pressure input may be adjusted to be medium, small, or large.

As described above, the present disclosure can be applied to the setting of the pressure input in two predetermined members in a welded body including three or more layers by focusing on the hardness of the two members.

### [Summary of Present Disclosure]

The specific embodiments described above include a disclosure having the following configurations.

A friction stir spot welding method according to a first aspect of the present disclosure is a friction stir spot welding method of welding a first member and a second member, which are made of metal, by softening the first member having a first front surface and a first back surface and the second member having a second front surface and a second back surface with frictional heat, the friction stir spot welding method including preparing a friction stir spot welding device including a pin and a cylindrical shoulder having a hollow portion into which the pin is inserted, disposing the first member and the second member such that at least a part of the second front surface faces the first back surface and forms an overlapping portion in which the first member and the second member overlap each other, disposing the pin and the shoulder to face the overlapping portion, setting a first pressure and a second pressure for press-fitting the shoulder such that the first pressure is smaller than the second pressure when a hardness of the first member is lower than a hardness of the second member, and the first pressure is larger than the second pressure when the hardness of the first member is higher than the hardness of the second member, press-fitting the shoulder from the first front surface side at the first pressure until reaching a predetermined reference position set with reference to the second front surface in a state where the pin is retracted with respect to the overlapping portion, press-fitting the shoulder from the reference position to a press-fitting position deeper than the second front surface with the second pressure, and retracting the shoulder from the press-fitting position and allowing the pin to enter the overlapping portion.

According to this configuration, in the friction stir spot welding of the first member and the second member, by adjusting the pressure at the time of press-fitting the shoulder according to the hardness of each member, it is possible to suppress a part of the member from being excessively pushed out to the outside, and to suppress deformation of the welded body around the spot welding portion. In addition, since it is possible to prevent occurrence of excessive indentation at the spot welding portion, it is possible to reduce unstable breakage of the welded body.

A friction stir spot welding method according to a second aspect of the present disclosure is the friction stir spot welding method according to the first aspect, further including setting the reference position in a range from a boundary between the first back surface and the second front surface to 73% of a plate thickness of a member having low hardness among the first member and the second member.

According to this configuration, it is possible to further suppress a part of the member from being excessively pushed out at the time of friction stir spot welding.

A friction stir spot welding method according to a third aspect of the present disclosure is the friction stir spot welding method according to the first aspect, further including using, as the first member and the second member, a member in which a hardness of the first member is lower than a hardness of the second member, and in the friction stir spot welding method according to the first or second aspect, setting the first pressure and the second pressure so as to satisfy P1/P2 < 0.91, where P1 is the first pressure and P2 is the second pressure.

According to this configuration, at the time of friction stir spot welding, in a case where the shoulder enters the second member having a high hardness from the first member having a relatively low hardness, it is possible to further suppress a part of the first member from being excessively pushed out to the outside.

A friction stir spot welding method according to a fourth aspect of the present disclosure is the friction stir spot welding method according to the first aspect, further including using, as the first member and the second member, a member in which a hardness of the first member is lower than a hardness of the second member, and setting the first pressure and the second pressure so as to satisfy P1/P2 < 0.7, where P1 is the first pressure and P2 is the second pressure.

According to this configuration, at the time of friction stir spot welding, in a case where the shoulder enters the second member having a high hardness from the first member having a relatively low hardness, it is possible to further suppress a part of the first member from being excessively pushed out to the outside.

A friction stir spot welding method according to a fifth aspect of the present disclosure is the friction stir spot welding method according to the first aspect, further including using, as the first member and the second member, a member in which a hardness of the first member is lower than a hardness of the second member, and setting the first pressure and the second pressure so as to satisfy P1/P2 ≤ 0.65, where P1 is the first pressure and P2 is the second pressure.

According to this configuration, at the time of friction stir spot welding, in a case where the shoulder enters the second member having a high hardness from the first member having a relatively low hardness, it is possible to further suppress a part of the first member from being excessively pushed out to the outside.

A friction stir spot welding method according to a sixth aspect of the present disclosure is the friction stir spot welding method according to any one of the first to fifth aspects, further including using metals having different main elements for the first member and the second member.

According to this configuration, even when metals having different main elements are used as the first member and the second member, it is possible to suppress deformation of the welded body around the spot welding portion.

A friction stir spot welding method according to a seventh aspect of the present disclosure is the friction stir spot welding method according to any one of the first to fifth aspects, further including using dissimilar metals having the same main element as the first member and the second member.

According to this configuration, even when dissimilar metals having the same main elements are used as the first member and the second member, it is possible to suppress deformation of the welded body around the spot welding portion.

A friction stir spot welding method according to an eighth aspect of the present disclosure is the friction stir spot welding method according to any one of the first to seventh aspects, further including interposing an adhesive or a sealing material between the first back surface of the first member and the first front surface of the second member before the shoulder is press-fitted.

According to this configuration, by interposing the adhesive or the sealing material between the first member and the second member before friction stir welding, it is possible to maintain close contact between the first member and the second member in a region other than the welded portion. On the other hand, in such a case, there is a possibility of causing a decrease in the TSS at the welded portion, but the TSS can be improved by adjusting the pressure at the time of press-fitting the shoulder according to the hardness of each member. In addition, it is also possible to suppress an excessive increase in the indentation amount.

A friction stir spot welding method according to a ninth aspect of the present disclosure is the friction stir spot welding method according to any one of the first to eighth aspects, further including setting outer diameters of the pin and the shoulder such that S/P ≤ 2.41, where P is a cross-sectional area of the pin and S is a cross-sectional area of the shoulder.

According to this configuration, by setting the relative thickness of the shoulder with respect to the pin to a specific range, it is possible to particularly suppress a part of the member from being excessively pushed out to the outside at the time of friction stir spot welding.

A friction stir spot welding method according to a tenth aspect of the present disclosure is the friction stir spot welding method according to any one of the first to eighth aspects, further including setting outer diameters of the pin and the shoulder such that S/P ≤ 1.8, where P is a cross-sectional area of the pin and S is a cross-sectional area of the shoulder.

According to this configuration, by setting the relative thickness of the shoulder with respect to the pin to a specific range, it is possible to particularly suppress a part of the member from being excessively pushed out to the outside at the time of friction stir spot welding.

A friction stir spot welding method according to an eleventh aspect of the present disclosure is the friction stir spot welding method according to any one of the first to tenth aspects, further including forming the overlapping portion such that an end portion of the first member is along an end portion of the second member, and disposing the pin and the shoulder to face the overlapping portion such that a shortest distance between an outer peripheral edge of the shoulder and the end portion of the first member when the shoulder abuts on the first front surface at a time of press-fitting is 8 mm or less.

According to this configuration, even under the condition where the distance between the end portion of the first member and the outer peripheral edge of the shoulder is as small as 8 mm or less, it is possible to prevent a part of the member from being excessively pushed outward and to prevent the outer shape of the welded body from being remarkably deformed.

A friction stir spot welding device according to a twelfth aspect of the present disclosure is a friction stir spot welding device for welding a first member and a second member, which are made of metal, by softening the first member having a first front surface and a first back surface and the second member having a second front surface and a second back surface with frictional heat, the friction stir spot welding device including a welding tool that includes a pin and a cylindrical shoulder having a hollow portion into which the pin is inserted, a rotation mechanism that is capable of rotating the welding tool, a moving mechanism that is capable of independently moving the pin and the shoulder in a direction in which the pin extends, and a control unit that controls the rotation mechanism and the moving mechanism, in which the control unit is configured to execute setting a first pressure and a second pressure for press-fitting the shoulder such that the first pressure is smaller than the second pressure when a hardness of the first member is lower than a hardness of the second member, and the first pressure is larger than the second pressure when the hardness of the first member is higher than the hardness of the second member, and in a state in which the first member and the second member are disposed so as to form an overlapping portion in which at least a part of the second front surface faces the first back surface and the first member and the second member overlap each other, and the pin and the shoulder are disposed so as to face the overlapping portion, the rotation mechanism and the moving mechanism are controlled such that the pin is retracted with respect to the overlapping portion, the shoulder is press-fitted from the first front surface side by the first pressure until reaching a predetermined reference position set with reference to the second front surface, the shoulder is press-fitted from the reference position to a press-fitting position deeper than the second front surface by the second pressure, and then the shoulder is retracted from the press-fitting position and the pin enters the overlapping portion.

According to this configuration, in the friction stir spot welding of the first member and the second member, by adjusting the pressure at the time of press-fitting the shoulder according to the hardness of each member, it is possible to suppress a part of the member from being excessively pushed out to the outside. As a result, it is possible to suppress deformation of the welded body in the periphery of the spot welding portion. In addition, since it is possible to prevent occurrence of excessive indentation at the spot welding portion, it is possible to reduce breakage of the welded body.

In addition, a friction stir spot welding device according to a thirteenth aspect of the present disclosure is the friction stir spot welding device according to the twelfth aspect, the control unit sets the reference position in a range from a boundary between the first back surface and the second front surface to 73% of a plate thickness of a member having low hardness among the first member and the second member.

According to this configuration, it is possible to further suppress a part of the member from being excessively pushed out at the time of friction stir spot welding.

Furthermore, a friction stir spot welding device according to a fourteenth aspect of the present disclosure is the friction stir spot welding device according to the twelfth or thirteenth aspect, in a case where a hardness of the first member is lower than a hardness of the second member, the control unit sets the first pressure and the second pressure so as to satisfy P1/P2 < 0.91, where P1 is the first pressure and P2 is the second pressure.

According to this configuration, at the time of friction stir spot welding, in a case where the shoulder enters the second member having a high hardness from the second member having a relatively low hardness, it is possible to further suppress a part of the first member from being excessively pushed out to the outside.

Furthermore, a friction stir spot welding device according to a fifteenth aspect of the present disclosure is the friction stir spot welding device according to the twelfth or thirteenth aspect, in a case where a hardness of the first member is lower than a hardness of the second member, the control unit sets the first pressure and the second pressure so as to satisfy P1/P2 < 0.7, where P1 is the first pressure and P2 is the second pressure.

According to this configuration, at the time of friction stir spot welding, in a case where the shoulder enters the second member having a high hardness from the second member having a relatively low hardness, it is possible to further suppress a part of the first member from being excessively pushed out to the outside.

Furthermore, a friction stir spot welding device according to a sixteenth aspect of the present disclosure is the friction stir spot welding device according to the twelfth or thirteenth aspect, in a case where a hardness of the first member is lower than a hardness of the second member, the control unit sets the first pressure and the second pressure so as to satisfy P1/P2 ≤ 0.65, where P1 is the first pressure and P2 is the second pressure.

According to this configuration, at the time of friction stir spot welding, in a case where the shoulder enters the second member having a high hardness from the second member having a relatively low hardness, it is possible to further suppress a part of the first member from being excessively pushed out to the outside.

## Claims

1. A friction stir spot welding method of welding a first member and a second member, which are made of metal, by softening the first member having a first front surface and a first back surface and the second member having a second front surface and a second back surface with frictional heat,
the friction stir spot welding method comprising:
preparing a friction stir spot welding device including a pin and a cylindrical shoulder having a hollow portion into which the pin is inserted;
disposing the first member and the second member such that at least a part of the second front surface faces the first back surface and forms an overlapping portion in which the first member and the second member overlap each other;
disposing the pin and the shoulder to face the overlapping portion;
setting a first pressure and a second pressure for press-fitting the shoulder such that the first pressure is smaller than the second pressure when a hardness of the first member is lower than a hardness of the second member, and the first pressure is larger than the second pressure when the hardness of the first member is higher than the hardness of the second member;
press-fitting the shoulder from the first front surface side at the first pressure until reaching a predetermined reference position set with reference to the second front surface in a state where the pin is retracted with respect to the overlapping portion;
press-fitting the shoulder from the reference position to a press-fitting position deeper than the second front surface with the second pressure; and
retracting the shoulder from the press-fitting position and allowing the pin to enter the overlapping portion.

2. The friction stir spot welding method according to claim 1, further comprising setting the reference position in a range from a boundary between the first back surface and the second front surface to 73% of a plate thickness of a member having low hardness among the first member and the second member.

3. The friction stir spot welding method according to claim 1, further comprising:
using, as the first member and the second member, a member in which a hardness of the first member is lower than a hardness of the second member; and
setting the first pressure and the second pressure so as to satisfy P1/P2 < 0.91, where P1 is the first pressure and P2 is the second pressure.

4. The friction stir spot welding method according to claim 1, further comprising:
using, as the first member and the second member, a member in which a hardness of the first member is lower than a hardness of the second member; and
setting the first pressure and the second pressure so as to satisfy P1/P2 < 0.7.

5. The friction stir spot welding method according to claim 1, further comprising:
using, as the first member and the second member, a member in which a hardness of the first member is lower than a hardness of the second member; and
setting the first pressure and the second pressure so as to satisfy P1/P2 ≤ 0.65.

6. The friction stir spot welding method according to any one of claims 1 to 5, further comprising using metals having different main elements as the first member and the second member.

7. The friction stir spot welding method according to any one of claims 1 to 5, further comprising using dissimilar metals having a same main element as the first member and the second member.

8. The friction stir spot welding method according to any one of claims 1 to 7, further comprising interposing an adhesive or a sealing material between the first back surface of the first member and the first front surface of the second member before the shoulder is press-fitted.

9. The friction stir spot welding method according to any one of claims 1 to 8, further comprising setting outer diameters of the pin and the shoulder such that S/P ≤ 2.41, where P is a cross-sectional area of the pin and S is a cross-sectional area of the shoulder.

10. The friction stir spot welding method according to any one of claims 1 to 8, further comprising setting outer diameters of the pin and the shoulder such that S/P ≤ 1.8, where P is a cross-sectional area of the pin and S is a cross-sectional area of the shoulder.

11. The friction stir spot welding method according to any one of claims 1 to 10, further comprising: forming the overlapping portion such that an end portion of the first member is along an end portion of the second member; and disposing the pin and the shoulder to face the overlapping portion such that a shortest distance between an outer peripheral edge of the shoulder and the end portion of the first member when the shoulder abuts on the first front surface at a time of press-fitting is 8 mm or less.

12. A friction stir spot welding device for welding a first member and a second member, which are made of metal, by softening the first member having a first front surface and a first back surface and the second member having a second front surface and a second back surface with frictional heat,
the friction stir spot welding device comprising:
a welding tool that includes a pin and a cylindrical shoulder having a hollow portion into which the pin is inserted;
a rotation mechanism that is capable of rotating the welding tool;
a moving mechanism that is capable of independently moving the pin and the shoulder in a direction in which the pin extends; and
a control unit that controls the rotation mechanism and the moving mechanism, wherein
the control unit is configured to execute:
setting a first pressure and a second pressure for press-fitting the shoulder such that the first pressure is smaller than the second pressure when a hardness of the first member is lower than a hardness of the second member, and the first pressure is larger than the second pressure when the hardness of the first member is higher than the hardness of the second member; and
in a state in which the first member and the second member are disposed so as to form an overlapping portion in which at least a part of the second front surface faces the first back surface and the first member and the second member overlap each other, and the pin and the shoulder are disposed so as to face the overlapping portion, the rotation mechanism and the moving mechanism are controlled such that the pin is retracted with respect to the overlapping portion, the shoulder is press-fitted from the first front surface side by the first pressure until reaching a predetermined reference position set with reference to the second front surface, the shoulder is press-fitted from the reference position to a press-fitting position deeper than the second front surface by the second pressure, and then the shoulder is retracted from the press-fitting position and the pin enters the overlapping portion.

13. The friction stir spot welding device according to claim 12, wherein the control unit sets the reference position in a range from a boundary between the first back surface and the second front surface to 73% of a plate thickness of a member having low hardness among the first member and the second member.

14. The friction stir spot welding device according to claim 12 or 13, wherein in a case where a hardness of the first member is lower than a hardness of the second member, the control unit sets the first pressure and the second pressure so as to satisfy P1/P2 < 0.91, where P1 is the first pressure and P2 is the second pressure.

15. The friction stir spot welding device according to claim 12 or 13, wherein in a case where a hardness of the first member is lower than a hardness of the second member, the control unit sets the first pressure and the second pressure so as to satisfy P1/P2 < 0.7, where P1 is the first pressure and P2 is the second pressure.

16. The friction stir spot welding device according to claim 12 or 13, wherein in a case where a hardness of the first member is lower than a hardness of the second member, the control unit sets the first pressure and the second pressure so as to satisfy P1/P2 ≤ 0.65, where P1 is the first pressure and P2 is the second pressure.
